# EUROPÄISCHE PATENTSCHRIFT

(11) **EP 3 804 515 B1**
(45) Veröffentlichungstag und Bekanntmachung des Hinweises auf die Patenterteilung: **01.11.2023**
(21) Anmeldenummer: 20196870.8
(22) Anmeldetag: 18.09.2020
(51) Int. Cl.: A01M 7/00

(54) **LANDWIRTSCHAFTLICHE VERTEILMASCHINE, VORZUGSWEISE EINE FELDSPRITZE ODER EINEN PNEUMATISCHEN DÜNGERSTREUER**
AGRICULTURAL DISTRIBUTOR, PREFERABLY A FIELD SPRAYER OR A PNEUMATIC FERTILIZER SPREADER
MACHINE D'ÉPANDAGE AGRICOLE, DE PRÉFÉRENCE PULVÉRISATEUR AGRICOLE OU ÉPANDEUR PNEUMATIQUE D'ENGRAIS

(30) Priorität: 10.10.2019 DE 102019127305
(43) Veröffentlichungstag der Anmeldung: 14.04.2021
(73) Patentinhaber: HORSCH LEEB Application Systems GmbH, 94405 Landau an der Isar (DE)
(72) Erfinder: HIRTHAMMER, Daniel, 92421 Schwandorf (DE)
(74) Vertreter: v. Bezold & Partner Patentanwälte - PartG mbB

(56) Entgegenhaltungen:
- EP-A1- 3 183 963
- EP-B1- 3 007 553
- DE-U1-202014 011 019
- US-A1- 2016 286 780

## Beschreibung

Die Erfindung betrifft eine landwirtschaftliche Verteilmaschine, vorzugsweise eine Feldspritze oder einen pneumatischen Düngerstreuer.

Gattungsgemäße landwirtschaftliche Verteilmaschinen umfassen ein Trägerfahrzeug, ein Verteilergestänge zum Ausbringen von Material, wie Düngemittel, Pflanzenschutzmittel oder Saatgut, das zumindest um eine in Fahrtrichtung verlaufende Schwenkachse bewegbar am Trägerfahrzeug mittelbar oder unmittelbar angeordnet ist und eine Steuereinrichtung zur Steuerung und/oder Regelung einer Drehlage des Verteilergestänges um die Schwenkachse.

Um das Material großflächig auf dem zu bearbeitenden Feldboden auszubringen, weisen Verteilergestänge derartiger Feldspritzen oder pneumatischer Düngerstreuer seitliche Ausleger mit großer Arbeitsbreite auf, teilweise von mehr als zwanzig Metern, an denen Ausbringmittel, z. B. Sprühdüsen bei Feldspritzen oder Prallteller bei pneumatischen Düngerstreuer, angeordnet sind. Für Transportfahrten werden solch breite Spritzgestänge gefaltet und eingeklappt.

Für eine effiziente Ausbringung, insbesondere zur möglichst gleichmäßigen Bedeckung des Bodens mit Material, soll der Abstand zwischen dem Verteilergestänge und Feldboden über die gesamte Arbeitsbreite möglichst konstant bleiben. Aus diesem Grund besteht bei zunehmenden Auslegerdimensionen und der damit einhergehenden Arbeitsbreite die Notwendigkeit, das Spritzgestänge in möglichst gleichbleibendem Abstand zum Boden zu führen, da bereits geringe Schrägstellungen des Spritzgestänges zu großen Abstandsdifferenzen der Ausbringmittel entlang des Verteilergestänges, z. B. der Sprühdüsen, zum Boden führen. Ungewollte Schwankungen des Verteilergestänges können ferner eine unerwünschte Abdrift des auszubringenden Materials verstärken.

Hierzu ist bekannt, ein Verteilergestänge um einen zentralen Punkt zumindest um eine Drehachse drehbar an einem Trägerfahrzeug aufzuhängen. Die Drehachse verläuft dabei vorzugsweise parallel zur Längsachse bzw. zur Fahrrichtung des Trägerfahrzeugs. Um eine gleichmäßige Ausbringung des Materials zu gewährleisten, wird der Abstand zwischen Oberkante des Bestandes und den Ausbringmitteln konstant auf einen definierten Abstand geregelt.

Aus dem Stand der Technik sind hierbei mehrere Ansätze bekannt, um das Verteilergestänge möglichst in der gewünschten Solldrehlage zu halten, Abweichungen von der Solldrehlage zu erfassen und bei Abweichungen das Verteilergestänge wieder mittels einer Stelleinrichtung in die Solldrehlage rückzuführen.

Es wird beispielhaft auf die EP 2 591 657 B1 verwiesen. Dort wird vorgeschlagen, eine Stelleinrichtung bereitzustellen, mittels derer die Drehlage des Verteilergestänges verändert werden kann, und die wahlweise in einem ersten Betriebsmodus oder einem zweiten Betriebsmodus betrieben werden kann. Hierbei wird in einem ersten Betriebsmodus eine weitgehend stellkraftfreie mechanische Verbindung herstellt, in dem das Ausbringgestänge weitestgehend von Drehmomenten um die Schwenkachse durch den Aufhängepunkt, resultierend aus Fahrzeugbewegungen um die Fahrzeuglängsachse, entkoppelt ist. Die stellkraftfreie Verbindung kann beispielsweise mittels annähernd in Echtzeit den Relativbewegungen zwischen dem Ausbringgestänge bzw. dessen Mittelteil und dem Trägerfahrzeug folgenden Stellbewegungen der Stelleinrichtung hergestellt und aufrechterhalten werden. In einem zweiten Betriebsmodus kann dann eine definierte Stellkraft und/oder ein definiertes Stellmoment in das Verteilergestänge zu dessen Verstellung eingeleitet werden.

Bei aus der Praxis bekannten landwirtschaftlichen Verteilmaschinen werden zur Bestimmung der Drehlage des Verteilergestänges Standardneigungssensoren eingesetzt, die den Winkel (Neigung) eines Objekts zur Schwerkraft messen, auch bezeichnet als Neigungssensoren vom Schwerkrafttyp, d. h. bei der Neigungsmessung wird der Winkel des Erdbeschleunigungsvektors zum Messobjekt in einer vertikalen Ebene gemessen. Beispiele hierfür sind sog. MEMS-Neigungssensoren. Derartige herkömmliche Neigungssensoren vom Schwerkrafttyp haben jedoch den Nachteil, dass externe Beschleunigung zu einer Verfälschung des gemessenen Neigungswinkels führen, da sich in diesem Fall die Erdbeschleunigung und die externe Beschleunigung überlagern und vektoriell addieren. Dieses Problem tritt jedoch in besonderem Maße bei Fahrten von landwirtschaftlichen Verteilmaschinen in unebenem Gelände auf, da hier unterschiedlichste weitere Beschleunigungen zusätzlich zur Erdbeschleunigung auf das Messobjekt wirken können, beispielsweise durch Wankbewegungen des Trägerfahrzeugs im unebenen Gelände erzeugte Beschleunigungen, horizontale Beschleunigungen beim Beschleunigen und Bremsen, Zentrifugalbeschleunigungen bei Kurvenfahrten, etc.

Entsprechend ist die Erfassung der Drehlage des Verteilergestänges mit einem derartigen herkömmlichen Neigungssensor fehlerbehaftet, was wiederum zu Ungenauigkeiten bei der Steuerung oder Regelung der Drehlage des Verteilergestänges führt.

Ein möglicher Ansatz zur Lösung dieses Problems ist in der EP 3 007 553 B1 beschrieben. Zur genauen Bestimmung der Drehlage des Verteilergestänges um die Schwenkachse wird vorgeschlagen, durch zeitliche Integration einer mit einem Drehratensensor erfassten Drehgeschwindigkeit eine Drehlage des Verteilergestänges zu berechnen, und die berechnete Drehlage mit einer direkt gemessenen Drehlage eines Drehwinkelsensors zur Bestimmung einer momentanen Drehlage des Gestänges zu fusionieren. Anhand der so bestimmten Drehlage erfolgt dann die Regelung oder Steuerung der Drehlage des Verteilergestänges. Es besteht ein Bedarf, diesen Ansatz weiter zu verbessern, um die Gestängeregelung auf Basis einer gemessenen Drehlage des Gestänges weiter zu verbessern.

Weitere Stand der Technik Dokumente sind besipielsweise: EP 3 183 963 A1, DE 20 2014 011019 U1, US 2016/286780 A1.

Es ist daher eine Aufgabe der Erfindung, einen verbesserten Ansatz zur Steuerung und/oder Regelung einer Drehlage eines Verteilergestänges einer landwirtschaftlichen Verteilmaschine bereitzustellen, mit dem Nachteile herkömmlicher Techniken vermieden werden können. Die Aufgabe der Erfindung ist es insbesondere, eine besonders präzise und gleichzeitig kosteneffiziente Technik zur Steuerung und/oder Regelung einer Drehlage eines Verteilergestänges einer landwirtschaftlichen Verteilmaschine bereitzustellen.

Diese Aufgaben werden durch eine landwirtschaftliche Verteilmaschine mit den Merkmalen des unabhängigen Anspruchs gelöst. Vorteilhafte Ausführungsformen und Anwendungen der Erfindung sind Gegenstand der abhängigen Ansprüche und werden in der folgenden Beschreibung unter teilweiser Bezugnahme auf die Figuren näher erläutert.

Gemäß einem allgemeinen Gesichtspunkt betrifft die vorliegende Offenbarung eine landwirtschaftliche Verteilmaschine, nachfolgend auch kurz als Verteilmaschine oder Landmaschine bezeichnet. Diese umfasst ein Trägerfahrzeug und ein Verteilergestänge zum Ausbringen von Material, wie Düngemittel, Pflanzenschutzmittel oder Saatgut. Das Verteilergestänge, auch als Ausbringgestänge bezeichnet, ist zumindest um eine in Fahrtrichtung des Trägerfahrzeugs verlaufende Schwenkachse bewegbar am Trägerfahrzeug mittelbar oder unmittelbar angeordnet. Die Schwenkachse kann eine Schwenkachse sein, die sich in Längsrichtung des Trägerfahrzeugs erstreckt. Das Verteilergestänge weist eine hohe Arbeitsbreite auf, d. h. eine Arbeitsbreite, die wesentlich größer als eine Breite des Trägerfahrzeugs, z. B. ein Vielfaches der Breite des Trägerfahrzeugs, ist. Die Arbeitsbreite des Verteilergestänges, d. h. die Breite in Arbeitsposition oder im vollständig ausgeklappten Zustand, kann mindestens 18 Meter sein. Das Verteilergestänge kann zueinander verschwenkbare Segmente aufweisen, die um aufrechte Achsen zueinander verschwenkbar sind und/oder die in einer senkrecht zur Fahrtrichtung, insbesondere zur Vorwärtsfahrtrichtung, der Verteilmaschine angeordneten Ebene relativ zueinander verschwenkbar sind.

Erfindungsgemäß umfasst die landwirtschaftliche Verteilmaschine eine beschleunigungskompensierte Neigungssensoreinrichtung zur Bestimmung einer Drehlage des Verteilergestänges. Unter einer beschleunigungskompensierten Neigungssensoreinrichtung kann eine Neigungssensoreinrichtung verstanden werden, die Mittel zur Kompensation externer Beschleunigungen umfasst, so dass die Verfälschung der Neigungsmessung aufgrund derartiger externer Beschleunigungen vermieden oder zumindest reduziert werden kann. Unter externen Beschleunigungen werden Beschleunigungen verstanden, die zusätzlich zur Erdbeschleunigung auf die Neigungssensoreinrichtung wirken, wie beispielsweise Querbeschleunigungen. Unter einer beschleunigungskompensierten Neigungssensoreinrichtung kann ferner eine Neigungssensoreinrichtung verstanden werden, die ein beschleunigungskompensiertes Neigungssignal ausgibt. Ein beschleunigungskompensiertes Neigungssignal ist ein Neigungssignal, das in Bezug auf die Neigungsmessung verfälschende externe Beschleunigungseffekte korrigiert ist, um Verfälschung der Neigungsmessung aufgrund derartiger externer Beschleunigungen zu vermeiden oder zumindest zu reduzieren.

Eine landwirtschaftliche Verteilmaschine, ausgestattet mit einer beschleunigungskompensierten Neigungssensoreinrichtung bietet den Vorteil einer besonders genauen Drehlagenmessung, was insbesondere bei Fahrten im unebenen Gelände und den dort auftretenden stark schwankenden externen Beschleunigungen besonders vorteilhaft ist. Ein weiterer Vorteil ist, dass eine kompakte Drehlagensensorik für die Verteilmaschine bereitgestellt werden kann.

In einer Ausführungsform umfasst die die beschleunigungskompensierte Neigungssensoreinrichtung einen Beschleunigungsaufnehmer und/oder einen Drehratensensor, vorzugsweise ein Gyroskop. Hierbei kann die Neigungssensoreinrichtung ferner ausgebildet sein, in Abhängigkeit von den Messwerten des Beschleunigungsaufnehmers und/oder Drehratensensors auftretende Störgrößen, welche eine Neigungsmessung verfälschen und durch externe Beschleunigungen, vorzugsweise Querbeschleunigungen, die zusätzlich zur Erdbeschleunigung auf die Neigungssensoreinrichtung wirken, verursacht werden, herauszurechnen. Die vorstehend genannten Mittel zur Kompensation externer Beschleunigungen können beispielsweise einen solchen Beschleunigungsaufnehmer und/oder Drehratensensor umfassen und ausgebildet sein, die Störgrößen herauszurechnen. Die zusätzliche Integration des Beschleunigungsaufnehmers und/oder des Drehratensensors in die Neigungssensoreinrichtung bietet somit den Vorzug, dass die auf die Neigungssensoreinrichtung einwirkenden Störgrößen direkt an der Stelle der Neigungsmessung gemessen und deren Effekte auf die Neigungsmessung entsprechend genau herausgerechnet werden können.

In einer Ausführungsform umfasst die beschleunigungskompensierte Neigungssensoreinrichtung eine erste Neigungssensoreinrichtung und eine zweite Neigungssensoreinrichtung. Hierbei basiert die zweite Neigungssensoreinrichtung auf einem im Vergleich zur ersten Neigungssensoreinrichtung unterschiedlichen Messprinzip. Hierbei sind sowohl die erste als auch die zweite Neigungssensoreinrichtung ausgebildet, Messgrößen zu messen, aus denen unmittelbar oder mittelbar eine Neigung bestimmt werden kann. Messgrößen, aus der die Neigung mittelbar bestimmt werden kann, sind beispielsweise die gemessene Drehrate oder die Beschleunigung, da die Drehlage über eine zeitliche Integration aus der Drehrate berechenbar ist und über eine zweimalige zeitliche Integration entsprechend aus der gemessenen Beschleunigung berechenbar ist. In dieser Ausführungsform umfasst die beschleunigungskompensierte Neigungssensoreinrichtung ferner eine Fusionseinrichtung zur Sensordatenfusion, die ausgebildet ist, Messwerte der ersten Neigungssensoreinrichtung mit Messwerten der zweiten Neigungssensoreinrichtung zu verrechnen, um die Auswirkungen von bewegungsbedingten Beschleunigungen auf die Neigungsmessung zu kompensieren.

Diese Ausführungsform bietet den Vorzug, dass durch die Verknüpfung der Messergebnisse mit an sich bekannten Techniken der Sensordatenfusion die Vor- und Nachteile unterschiedlicher Messprinzipien genutzt werden können, um eine Neigungsmessung mit höherer Genauigkeit zu erzielen, als die Genauigkeit, die erzielbar wäre, falls jedes Messprinzip nur für sich herangezogen würde.

Lediglich beispielhaft können Fusionsalgorithmen basierend auf rekursiver Bayes-Schätzung, z. B. Kaiman-Filter oder Partikelfilter für multi-modale Wahrscheinlichkeitsverteilung zwischen Neigungssensoreinrichtungen zum Einsatz kommen.

Gemäß einem Aspekt kann die beschleunigungskompensierten Neigungssensoreinrichtung am Verteilergestänge, vorzugsweise am Mittelteil des Verteilergestänges angeordnet sein.

Gemäß einem möglichen Aspekt kann hierbei die erste Neigungssensoreinrichtung als Neigungssensor ausgeführt sein, der eine Neigung in Bezug auf die Schwerkraft misst und dessen Neigungsmessung durch externe Beschleunigungen, die zusätzlich zur Erdbeschleunigung auftreten, verfälscht werden. Derartige Neigungssensoren können auch als statische oder quasi-statische Neigungssensoren bezeichnet werden. Ferner kann die zweite Neigungssensoreinrichtung einen Beschleunigungsaufnehmer und/oder Drehratensensor umfassen. In einer Weiterbildung dieses Aspekts kann die Fusionseinrichtung ausgebildet sein, Messwerte der zweiten Neigungssensoreinrichtung zur Ermittlung einer Drehlage des Verteilergestänges zeitlich zu integrieren und mittels einer Datenfusionsberechnung mit den Messwerten der ersten Neigungssensoreinrichtung zur Bestimmung einer beschleunigungskompensierten Drehlage des Verteilergestänges zu verknüpfen. Beispielsweise kann hierbei eine Sensordatenfusion durch die Fusionseinrichtung von gemessener Drehlage mit einer berechneten Drehlage, die über eine zeitliche Integration berechnet wurde, zum Einsatz kommen, wie es in EP 3 007 553 B1 beschrieben ist. Dies bietet den Vorzug, dass Störeffekte, bedingt durch externe Beschleunigungen, anhand der berechneten Drehlage herausgerechnet werden können, während sog. Winkel-Drift-Fehler bei der berechneten Drehlage durch die direkt gemessenen Drehlage kompensiert werden können.

Erfindungsgemäß ist vorgesehen, dass die Komponenten der beschleunigungskompensierten Neigungssensoreinrichtung von einem gemeinsamen Gehäuse umhaust sind und/oder als bauliche Einheit ausgebildet sind. Unter Komponenten werden alle Sensoreinrichtungen und Datenverarbeitungseinrichtungen der beschleunigungskompensierten Neigungssensoreinrichtung verstanden, die zur Bestimmung des beschleunigungskompensierten Neigungssignals erforderlich sind. Gemäß den vorgenannten Ausführungsformen können somit die erste Neigungssensoreinrichtung, die zweite Neigungssensoreinrichtung und die Fusionseinrichtung als Komponenten von einem gemeinsamen Gehäuse der beschleunigungskompensierten Neigungssensoreinrichtung umhaust sein. Dies bietet den Vorzug einer einfachen Montage und kompakten Anordnung am Verteilergestänge und geringe Verkabelungsaufwände.

Alternativ oder zusätzlich können die Komponenten der beschleunigungskompensierten Neigungssensoreinrichtung mechanisch miteinander gekoppelt sein, so dass diese die gleiche Neigung und/oder die gleiche Beschleunigung erfahren. Ferner können die Komponenten der beschleunigungskompensierten Neigungssensoreinrichtung an der gleichen Stelle am Verteilergestänge, vorzugsweise am Mittelteil des Verteilergestänges, angeordnet sein.

Die landwirtschaftliche Verteilmaschine kann in an sich bekannter Weise eine Abstandssensoreinrichtung aufweisen, die ausgebildet ist, einen Abstand des Verteilergestänges zu einer Bodenfläche und/oder einem Pflanzenbestand zu erfassen. Die Abstandssensoreinrichtung kann am Verteilergestänge angeordnete Ultraschallsensoren umfassen, die einen Abstand zum Boden messen. Die Abstandssensoreinrichtungen kann ferner ausgebildet sein, von mehreren der Segmente des Verteilergestänges jeweils einen Abstand des Segments zum Boden und/oder zum Pflanzenbestand zu messen und hierzu vorzugsweise mehrere Abstandssensoren umfassen, die an verschiedenen Segmenten angeordnet sind.

Die Verteilmaschine kann ferner eine Stelleinrichtung umfassen, mittels der eine Stellkraft erzeugbar ist, um das Verteilergestänge um die Schwenkachse zu bewegen. Die Stelleinrichtung kann hierzu ein pneumatisch, hydraulisch oder elektromotorisch betätigtes Stellorgan umfassen, das sowohl am Verteilergestänge als auch am Trägerfahrzeug mittelbar oder unmittelbar befestigt ist und über eine erzeugte Stellkraft eine Drehlage des Verteilergestänges beeinflussen kann. Das Stellorgan kann als Verstellzylinder ausgeführt sein.

Die Verteilmaschine kann ferner eine Steuereinrichtung zur Steuerung und/oder Regelung einer Drehlage des Verteilergestänges um die Schwenkachse umfassen, wobei die Steuereinrichtung ausgebildet ist, in Abhängigkeit von den Ausgangssignalen der beschleunigungskompensierten Neigungssensoreinrichtung Steuersignale zur Ansteuerung der Stelleinrichtung zu erzeugen.

In einer Ausführungsform ist die Steuereinrichtung ausgebildet, eine aktuelle Drehlage des Verteilergestänges lediglich in Abhängigkeit der Ausgangssignale der beschleunigungskompensierten Neigungssensoreinrichtung zu bestimmen.

Alternativ besteht die Möglichkeit, dass die Steuereinrichtung ausgebildet ist, eine aktuelle Drehlage des Verteilergestänges in Abhängigkeit von den Ausgangssignalen der beschleunigungskompensierten Neigungssensoreinrichtung und von den Ausgangssignalen eines zwischen Trägerfahrzeug und Verteilergestänge angeordneten und eine Relativdrehung zwischen Trägerfahrzeug und Verteilergestänge erfassenden Drehwinkelsensors zu bestimmen.

In einer bevorzugten Ausführungsform ist die Stelleinrichtung als eine druckmittelbetätigte Stelleinrichtung ausgebildet, beispielsweise als eine pneumatisch oder hydraulisch arbeitende Stelleinrichtung. Ferner kann die druckmittelbetätigte Stelleinrichtung als eine druckmittelbetätigte Stelleinrichtung mit zwei im Wesentlichen entgegengesetzt wirkenden Wirkbereichen ausgeführt sein, mittels der eine Stellkraft erzeugbar ist, um das Verteilergestänge um die Schwenkachse zu bewegen. Hierbei ist jedem Wirkbereich ein Druckmittelregelventil zugeordnet zur Steuerung eines an dem jeweiligen Wirkbereich anliegenden Drucks oder Volumenstroms. Die druckmittelbetätigte Stelleinrichtung umfasst mindestens einen druckmittelbetätigten Aktuator.

Mit "Wirkbereich" der Stelleinrichtung bzw. des Aktuators ist ein Bereich der Stelleinrichtung bzw. des Aktuators bezeichnet, in welchem die Druckkraft von Druckmittel in eine Bewegung eines Stellorgans der Stelleinrichtung bzw. des Aktuators umgesetzt wird oder umsetzbar ist. Unter "zwei im Wesentlichen entgegengesetzt wirkenden" Wirkbereichen soll verstanden werden, dass eine Druckkraft von Druckmittel in dem einen Wirkbereich eine Verstellkraft auf das Verteilergestänge in der einen Richtung um die Schwenkachse erzeugt und eine Druckkraft von Druckmittel in dem anderen Wirkbereich eine Verstellkraft auf das Verteilergestänge in der entgegengesetzten Richtung um die Schwenkachse erzeugt. Anders ausgedrückt kann für jede Richtung zum Verschwenken des Verteilgestänges (im Uhrzeigersinn oder im Gegenuhrzeigersinn) ein Druckmittelregelventil verwendet werden.

Die Steuereinrichtung ist ferner ausgebildet, in Abhängigkeit von der mittels der beschleunigungskompensierte Neigungssensoreinrichtung bestimmten Drehlage des Verteilergestänges eine Sollwertvorgabe eines an den Wirkbereichen wirkenden Drucks oder einer an den Wirkbereichen wirkenden Stellkraft (Druckkraft) des Druckmittels zu bestimmen und die Druckmittelregelventile jeweils elektrisch gesteuert auf die Sollwertvorgabe einzustellen.

Diese Ausführungsform der landwirtschaftlichen Verteilmaschine bietet den besonderen Vorzug, dass die Druckmittelregelventile in Kombination mit der beschleunigungskompensierten Drehlagenmessung eine besonders präzise und schnelle Steuerung der an den Wirkbereichen wirkenden Kräfte zur Steuerung und/oder Regelung der Lage des Verteilergestänges ermöglichen.

Gemäß einer möglichen Weiterbildung kann die Steuereinrichtung ferner ausgebildet sein, die Druckmittelregelventile jeweils anhand einer vorbestimmten Kennlinie der Druckmittelregelventile elektrisch gesteuert auf die Sollwertvorgabe einzustellen. Die Kennlinie der Druckmittelregelventile legt einen Zusammenhang zwischen Sollwertvorgabe, z. B. Druck an den Wirkbereichen, und elektrischem Ansteuerungssignal, z. B. der Bestromung, der Druckmittelregelventile fest. Dies hat den Vorteil, dass über die Kennlinie der Druckmittelregelventile der Druck auf das Verteilergestänge präzise an die Sollwertvorgabe angepasst werden kann.

Die Druckmittelregelventile arbeiten daraufhin so, dass die gewünschte Sollwertvorgabe am jeweiligen Wirkbereich eingestellt wird, z. B. dort der gewünschte Druck oder Volumenstrom eingestellt wird. Die Kennlinie kann in der Steuereinrichtung oder einem Datenspeicher der landwirtschaftlichen Maschine hinterlegt sein. Es kann eine Kennlinie hinterlegt sein, die für beide Druckmittelregelventile gilt, falls diese z. B. baugleich ausgeführt sind. Es kann auch für jedes Druckmittelregelventil eine eigene Kennlinie hinterlegt sein.

Gibt beispielsweise die in Abhängigkeit von der aktuellen Drehlage bestimmte Sollwertvorgabe vor, welcher Druck oder Volumenstrom des Druckmittels an den Wirkbereichen erforderlich ist, kann anhand der Kennlinie das elektrische Ansteuerungssignal der Druckmittelregelventile, z. B. deren Bestromung, ermittelt und zur aktiven Steuerung und/oder Regelung der Drehlage des Verteilgestänge verwendet werden. Soll lediglich beispielhaft ein definierter Differenzdruck oder eine definierte Differenzkraft an den Wirkbereichen vorliegen, werden die vorzugsweise gegensinnig arbeitenden Druckmittelregelventile jeweils auf Basis der in der Steuerungseinrichtung hinterlegten Kennlinie(n) entsprechend elektrisch angesteuert und somit ein definierter Differenzdruck bzw. eine definierte Differenzkraft erzeugt.

Ein besonderer Vorzug dieser Ausführungsformen ist daher, dass ein besonders kosteneffizienter Aufbau ermöglicht wird, da zur Regelung oder Steuerung der Drehlage des Verteilergestänges vorzugsweise nur die beschleunigungskompensierte Neigungssensoreinrichtung verwendet wird, und zusätzlich zu den Druckmittelregelventilen jedoch keine weitere Drucksensorik oder Kraftsensoren erforderlich sind, die mit der Stelleinrichtung gekoppelt oder in diese integriert sind.

Entsprechend ist in einer weiteren Ausführungsform die Steuereinrichtung ausgebildet, die Sollwertvorgabe ohne einen sensorisch erfassten Druckwert oder Volumenstromwert des Druckmittels zu bestimmen. Ferner kann die Steuereinrichtung ausgebildet sein, einen Steuerstrom zur Ansteuerung der Druckmittelregelventile ausschließlich anhand der Kennlinie und der mittels der beschleunigungskompensierten Neigungssensoreinrichtung erfassten Drehlage des Verteilergestänges zu bestimmen. Dies bietet den Vorteil, dass eine besonders effiziente Steuerung und/oder Regelung der Drehlage des Verteilergestänges ermöglicht wird.

Gemäß einer weiteren Ausführungsform ist die Steuereinrichtung ausgebildet, falls die bestimmte Drehlage einer Solldrehlage des Verteilergestänges entspricht und/oder nicht mehr als um einen Schwellenwert von der Solldrehlage abweicht, ein der Sollwertvorgabe zugeordnetes elektrisches Ansteuerungssignal der Druckmittelregelventile konstant zu halten. Ferner kann hierbei vorgesehen sein, dass keine Stellkräfte in das Verteilergestänge eingeleitet werden. Dies kann vorzugsweise derart erfolgen, dass beispielsweise durch Wankbewegungen des Trägerfahrzeugs oder durch Gestängebewegungen verursachte Druckspitzen oder Kräfteschwankungen an den Wirkbereichen durch die Druckmittelregelventile selbstständig ausgeregelt werden und/oder indem der auf Basis der Sollwertvorgabe vorgegebene Druck oder die entsprechend vorgegebene Kraft konstant gehalten wird.

Unter "keine Stellkräfte in das Verteilergestänge einzuleiten" soll in diesem Zusammenhang verstanden werden, dass keine Verstellkräfte zur Veränderung der Drehlage des Verteilergestänges eingeleitet werden. Vielmehr stellt das konstante Ansteuerungssignal der Druckmittelregelventile sicher, dass in das Verteilergestänge eingeleitete Störmomente, z. B. resultierend aus Wankbewegungen des Trägerfahrzeugs, sofort ausgeglichen, z. B. ausregegelt werden, so dass diese erst gar nicht zu einer unerwünschten Veränderung der Drehlage und unerwünschten Verstellung des Verteilergestänges führen.

Entsprechend kann die Steuereinrichtung ausgebildet sein, falls die bestimmte Drehlage einer Solldrehlage des Verteilergestänges entspricht und/oder nicht mehr als um einen Schwellenwert von der Solldrehlage abweicht, einen Betriebsmodus durchzuführen, in dem das Verteilergestänge weitestgehend von Drehmomenten um die Schwenkachse resultierend aus Fahrzeugbewegungen um die Fahrzeuglängsachse entkoppelt ist, wobei ein der Sollwertvorgabe entsprechendes elektrisches Ansteuerungssignal der Druckmittelregelventile konstant gehalten wird. Dieser Betriebsmodus wird nachfolgend auch als erster Betriebsmodus bezeichnet, zur besseren Unterscheidung von einem weiteren zweiten Betriebsmodus. Hierbei ist es jedoch von großem Vorteil, dass die aktuelle Drehlage in allen Betriebssituationen möglichst fehlerfrei bestimmt werden kann, da ansonsten im ersten Betriebsmodus sonst die Gefahr besteht, dass nicht auf die richtige Solldrehlage eingeregelt wird. Die genaue Bestimmung in allen Betriebssituationen kann mit einem beschleunigungskompensierten Drehlagensensor zuverlässig erzielt werden.

In einer weiteren Ausführungsform ist die Steuereinrichtung ausgebildet, bei einer Abweichung der bestimmten Drehlage von einer Solldrehlage des Verteilergestänges oder falls die bestimmte Drehlage um mehr als einen Schwellenwert von der Solldrehlage abweicht, einen zweiten Betriebsmodus durchzuführen, in welchem solange eine Stellkraft über die Stelleinrichtung in das Verteilergestänge eingeleitet wird, bis dieses sich in die Solldrehlage gedreht hat. Hierbei kann die Steuereinrichtung ausgebildet sein, für jeden der Wirkbereiche entsprechende Sollwertevorgaben zu bestimmen, damit eine entsprechende Verstellkraft über die Wirkbereiche erzeugt wird, die bewirkt, dass sich das Verteilergestänge hin zur Solldrehlage dreht. Nach Erreichen der Solldrehlage kann wieder in den ersten Betriebsmodus gewechselt werden.

Beispielhaft können im zweiten Betriebsmodus die Sollwertvorgaben wie folgt bestimmt bzw. vorgegeben werden: eine Sollwertvorgabe, nachfolgend als erste Sollwertvorgabe bezeichnet, die eine Bewegung des Verteilergestänges hin zur Solldrehlage bewirkt; eine weitere Sollwertvorgabe, nachfolgend als dritte Sollwertvorgabe bezeichnet, die ein Halten des Verteilergestänges in der Solldrehlage bewirkt, und mindestens eine weitere Sollwertvorgabe, nachfolgend als zweite Sollwertvorgabe bezeichnet, deren Wert zwischen der ersten und der dritten Sollwertvorgabe liegt. Gemäß dieser weiteren Ausführungsform ist die Steuereinrichtung ausgebildet, die Druckmittelregelventile jeweils elektrisch gesteuert zuerst auf die erste Sollwertvorgabe, dann vor Erreichen der Solldrehlage auf die mindestens eine zweite Sollwertvorgabe und bei Erreichung der Sollwertvorgabe auf die dritte Sollwertvorgabe einzustellen.

Dies bietet den Vorteil, dass bei einer Verstellung des Verteilergestänges hin in die gewünschte Solldrehlage das Verteilergestänge vor Erreichen der Solldrehlage aktiv abgebremst bzw. gedämpft wird, so dass eine schnelle Einstellung der Solldrehlage, möglichst ohne oder mit wenig Überschwingen ermöglicht wird, wobei hierzu vorteilhafterweise die Druckmittelventile lediglich auf die erste, zweite und dritte Sollwertvorgabe elektrisch angesteuert eingestellt werden müssen. Die Solldrehlage kann beispielsweise mittels am Verteilergestänge angeordneten Abstandssensoren, die den Abstand des Verteilergestänges zum Boden oder Pflanzenbestand messen, bestimmt werden. Die Abstandssensoren können als Ultraschallsensoren ausgeführt sein.

Um eine steuerungs- oder regelungstechnisch besonders vorteilhafte Ansteuerung der Druckmittelregelventile zu realisieren, kann hierbei optional ferner vorgesehen sein, dass die Einstellung der Druckmittelregelventile auf die erste, zweite und dritte Sollwertvorgabe anhand der vorbestimmten Kennlinie, wie vorstehend erwähnt, erfolgt. Vorzugsweise kann diese Ansteuerung der Druckmittelregelventile hierbei ausschließlich anhand der vorbestimmten Kennlinie erfolgen. Dies bedeutet, dass anhand der Kennlinie die elektrischen Ansteuerungswerte, z. B. die Bestromungswerte, für die Druckmittelventile ermittelt werden, die jeweils der ersten Sollwertvorgabe, der mindestens einen zweiten Sollwertvorgabe und der dritten Sollwertvorgabe entsprechen, und die Druckmittelregelventile dann entsprechend nur auf Basis dieser Ansteuerungswerte angesteuert werden.

Gemäß einer Variante dieser Ausführungsform ist vorgesehen, dass mehrere zweite Sollwertvorgaben für jeden Wirkbereich bestimmt werden, vorzugsweise derart, dass die dritte Sollwertvorgabe ausgehend von der ersten Sollwertvorgabe mittels der zweiten Sollwertvorgaben treppenartig ansteigend oder absteigend eingestellt wird. Hierdurch kann das Einstellen der Solldrehlage besonders präzise erfolgen und Überschwingungen besonders zuverlässig vermieden werden.

An Stellen einer treppenartigen bzw. gestuften Einstellung des Übergangs von der dritten Sollwertvorgabe ausgehend von der ersten Sollwertvorgabe kann auch eine Vielzahl zweiter Sollwertvorgaben bestimmt werden, so dass ein kontinuierlicher, oder nahezu kontinuierlicher, Übergang realisiert wird. In der Praxis hat sich jedoch im Rahmen der Erfindung gezeigt, dass aufgrund der vergleichsweise großen Trägheit des Verteilergestänges einige wenige zweite Sollwertvorgaben ausreichend sind.

Alternativ oder zusätzlich kann die Steuereinrichtung ausgebildet sein, die mindestens eine zweite Sollwertvorgabe, vorzugsweise deren Anzahl und/oder Abweichung von der ersten und dritten Sollwertvorgabe, in Abhängigkeit von der Abweichung der bestimmten Drehlage von der Solldrehlage des Verteilergestänges festzulegen. Hierdurch kann die Einstellung der gewünschten Solldrehlage weiter verbessert werden.

Gemäß einer besonders vorteilhaften Ausführungsform sind die Druckmittelregelventile als Druckregelventile ausgeführt, beispielsweise als elektromagnetisch angesteuerte Proportional-Druckregelventile. Alternativ zu einer Druckregelung an den Wirkbereichen kann auch eine Volumenstromregelung realisiert sein. Gemäß dieser Variante können die Druckmittelregelventile als Volumenstrom-Regelventile ausgeführt sein, beispielsweise als elektromagnetisch angesteuerte Volumenstrom-Regelventile.

In einer Ausführungsform kann die Stelleinrichtung zur Ausbildung der zwei im Wesentlichen entgegengesetzt wirkenden Wirkbereiche einen doppeltwirkenden fluidischen Druckmittelzylinder aufweisen. Alternativ hierzu kann die Stelleinrichtung zur Ausbildung der zwei im Wesentlichen entgegengesetzt wirkenden Wirkbereiche zwei gegensinnig arbeitende, einfachwirkende, fluidische Druckmittelzylinder aufweisen. In einer besonders vorteilhaften Variante können die zwei gegensinnig arbeitenden einfachwirkenden fluidischen Druckmittelzylinder jeweils als Plungerzylinder ausgeführt sein.

Die vorgenannten fluidischen Druckmittelzylinder können als hydraulisch arbeitende oder pneumatisch arbeitende Druckmittelzylinder ausgeführt sein.

Gemäß einer Ausführungsform ist die Stelleinrichtung ausgebildet, das Verteilergestänge wahlweise in beide Drehrichtungen um die in Fahrtrichtung verlaufende Schwenkachse mit einer Winkelgeschwindigkeit von mindestens 0,1 rad/s, weiter vorzugsweise von mindestens 0,2 rad/s zu bewegen. Hierzu ist die Stelleinrichtung entsprechend auszulegen, z. B. indem eine Verfahrgeschwindigkeit des am Gestänge angreifenden Stellorgans der Stelleinrichtung, z. B. eines Hydraulik- oder Pneumatikzylinders, unter Berücksichtigung des wirkenden Hebelarms des Stellorgans entsprechend groß gewählt wird. Beispielsweise kann die Stelleinrichtung ausgebildet sein, Verfahrgeschwindigkeiten zu erzielen, die im Bereich zwischen 100 mm/s und 500 mm/s liegen.

Ferner kann an jedem Wirkbereich der Stelleinrichtung je eine Druckmittelleitungsstrecke angeschlossen sein, durch welche den Wirkbereichen das Druckmittel zuführbar und aus diesen abführbar ist. Hierbei ist in jeder Druckmittelleitungstrecke eines der Druckmittelregelventile zur Steuerung eines an dem jeweiligen Wirkbereich anliegenden Drucks oder Volumenstroms angeordnet. Ferner kann vorgesehen sein, dass den Druckmittelregelventilen jeweils kein Sperrventil zugeordnet ist, d. h. in einer das Druckmittelventil aufweisenden Druckmittelleitungsstrecke ist gemäß dieser Variante nicht noch ein Sperrventil angeordnet.

Die landwirtschaftliche Verteilmaschine kann eine Feldspritze sein. Gemäß dieser Ausführungsform ist das Verteilgestänge ein Spritzgestänge mit beidseits des Trägerfahrzeugs abstehenden Auslegern sowie an diesem angeordneten, mit einem Speicher für mindestens einen flüssigen und/oder festen Wirkstoff verbundenen und/oder verbindbaren, Ausbringungsmitteln, wie beispielsweise mit einem Spritzmitteltank verbundene und/oder verbindbare Spritzdüsen.

Die landwirtschaftliche Maschine kann ein pneumatischer Düngerstreuer sein. Der Düngerstreuer kann ein Düngerstreuer zum Verteilen von körnigen Düngemitteln sein. Der Düngerstreuer kann einen Vorratsbehälter für das zu verteilende Düngemittel aufweisen. Der Düngerstreuer kann mehrere, am Verteilergestänge angeordnete Verteilelemente zum Ausbringen von körnigem Dünger aufweisen. Die Verteilelemente können jeweils einen Prallteller aufweisen.

Die landwirtschaftliche Verteilmaschine kann als eine selbstfahrende oder als eine mittels eines Zugfahrzeugs koppelbare bzw. gezogene oder als an einem Zugfahrzeug anbaubare und/oder angebaute landwirtschaftliche Verteilmaschine ausgebildet sein. Die selbstfahrende Verteilmaschine kann zudem eine autonom fahrende Landmaschine sein, beispielsweise eine vollautonom oder teilautonom fahrende Landmaschine.

Die landwirtschaftliche Maschine kann eine Höhenverstelleinrichtung zur Höhenverstellung des Verteilergestänges gegenüber dem Trägerfahrzeug aufweist, beispielsweise ausgeführt als Parallelogrammgestänge mit mindestens einem Stellzylinder.

Das Verteilergestänge, das zumindest um eine in Fahrtrichtung verlaufende Schwenkachse bewegbar am Trägerfahrzeug mittelbar oder unmittelbar angeordnet ist, kann an einem Träger gehaltert sein, der wiederum beispielsweise mit einem Aufbau- oder Rahmenabschnitt oder einer Rahmenkonstruktion des Trägerfahrzeugs und/oder mit einem starr oder beweglich gelagerten Stützabschnitt des Trägerfahrzeugs gekoppelt ist. Ferner kann der Träger höhenverstellbar an dem Aufbau- oder Rahmenabschnitt oder einer Rahmenkonstruktion des Trägerfahrzeugs angebracht sein, wobei die Höhenverstellung insbesondere mittels eines zwischen der Rahmenkonstruktion und dem Träger angebrachten Viergelenks, z. B. in Form eines Parallelogramms, erfolgen kann. Auch kann die Höhenverstellung mittels eines zwischen der Rahmenkonstruktion und dem Träger angebrachten Linearschlittens erfolgen. Zur Höhenverstellung kann dem Parallelogramm oder dem Linearschlitten z. B. ein Linearantrieb in Form eines Hydraulik- oder Pneumatikzylinders zugeordnet sein, so dass der Höhenabstand zwischen dem Verteilgestänge und einer Bodenoberfläche bzw. einem Pflanzenbestand variabel veränderbar ist.

Die Schwenkachse kann ferner beispielsweise durch ein Kugelgelenk ausgebildet sein. Das Kugelgelenk ermöglicht nicht nur eine Verschwenkung um die Schwenkachse, sondern ferner um eine weitere Achse.

Das Verteilgestänge kann ein Mittelteil und um aufrechte, d. h. vertikale, Achsen schwenkbar zum Mittelteil angeordnete seitliche Ausleger aufweisen, wobei die Ausleger sich aus zwei oder mehr, wiederum um aufrechte Achsen schwenkbar zueinander angeordnete, Segmente zusammensetzen können. Alternativ oder zusätzlich besteht die Möglichkeit, dass die Ausleger und vorzugsweise auch deren Segmente in einer senkrecht zur Vorwärtsfahrtrichtung der Verteilmaschine angeordneten Ebene relativ zum Mittelteil verschwenkbar sind zur besseren Anpassung an ein Bodenprofil. Letzteres bedeutet, dass die Segmente um eine in Fahrtrichtung verlaufende Achse relativ zueinander verschwenkbar sein können.

Die zuvor beschriebenen bevorzugten Ausführungsformen und Merkmale der Erfindung sind beliebig miteinander kombinierbar. Weitere Einzelheiten und Vorteile der Erfindung werden im Folgenden unter Bezug auf die beigefügten Zeichnungen beschrieben. Es zeigen:
- Figur 1: eine perspektivische Ansicht einer landwirtschaftlichen Verteilmaschine gemäß einer Ausführungsform der Erfindung;
- Figur 2: einen Detailausschnitt auf ein Verteilergestänge an einem Rahmen mit einer druckmittelbetätigten Stelleinrichtung gemäß einer Ausführungsform der Erfindung;
- Figur 3: eine schematische Ansicht einer Steuereinrichtung und der druckmittelbetätigten Stelleinrichtung der landwirtschaftlichen Verteilmaschine gemäß einem Ausführungsbeispiel;
- Figur 4: eine Kennlinie zur Ansteuerung der Druckregelventile gemäß einem Ausführungsbeispiel;
- Figur 5: ein schematisches Blockdiagramm zur Illustration der Steuerung oder Regelung der Drehlage des Verteilergestänges gemäß einem Ausführungsbeispiel;
- Figur 6: ein schematisches Blockdiagramm zur Illustration eines zweiten Betriebsmodus gemäß einem Ausführungsbeispiel;
- Figur 7: einen beschleunigungskompensierten Neigungssensor und ein schematisches Blockdiagramm zur Illustration der Verarbeitung der Sensorsignale gemäß einem Ausführungsbeispiel; und
- Figur 8: ein beispielhafter zeitlicher Verlauf der Sollwertvorgabe im zweiten Betriebsmodus gemäß einem Ausführungsbeispiel.

Gleiche oder funktional äquivalente Elemente sind in allen Figuren mit denselben Bezugszeichen bezeichnet und zum Teil nicht gesondert beschrieben.

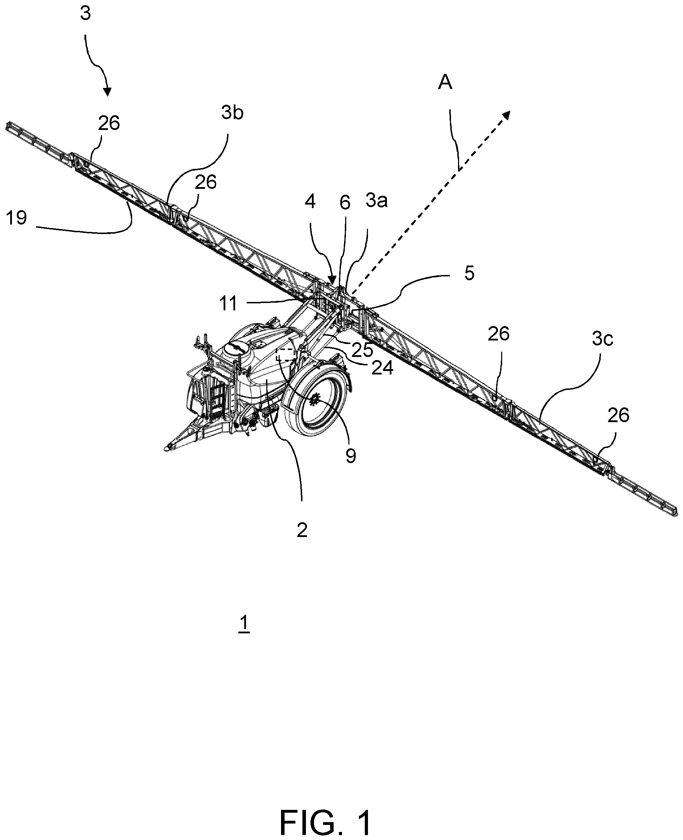

Figur 1 zeigt eine perspektivische Ansicht einer landwirtschaftlichen Verteilmaschine 1 gemäß einer Ausführungsform der Erfindung: Die landwirtschaftliche Verteilmaschine ist beispielhaft als gezogene Feldspritze ausgeführt. Die Verteilmaschine 1 umfasst ein Trägerfahrzeug 2 und ein Verteilergestänge 3 zum Ausbringen von Düngemittel oder Pflanzenschutzmittel. Das Verteilergestänge 3 ist zumindest um eine in Fahrtrichtung verlaufende Schwenkachse A, illustriert mit der gestrichelten Linie, bewegbar am Trägerfahrzeug 2 angeordnet. Das Verteilergestänge 3, bei einer Feldspritze als Spritzgestänge bezeichnet, umfasst ein Mittelteil 3a und zwei beidseits des Trägerfahrzeugs 2 abstehende Ausleger 3b, 3c. Entlang des Spritzgestänges sind verteilt und beabstandet Sprühdüsen bzw. Düsenstücke 19 angeordnet, die über Leitungen mit einem im Trägerfahrzeug 2 angeordneten Spritzmitteltank fluidisch verbunden sind. An jedem Ausleger 3b, 3c sind ferner jeweils zwei Abstandssensoren in Form von Ultraschallsensoren 26 angeordnet, die den Abstand des Gestänges zum Boden bzw. zum Pflanzenbestand messen.

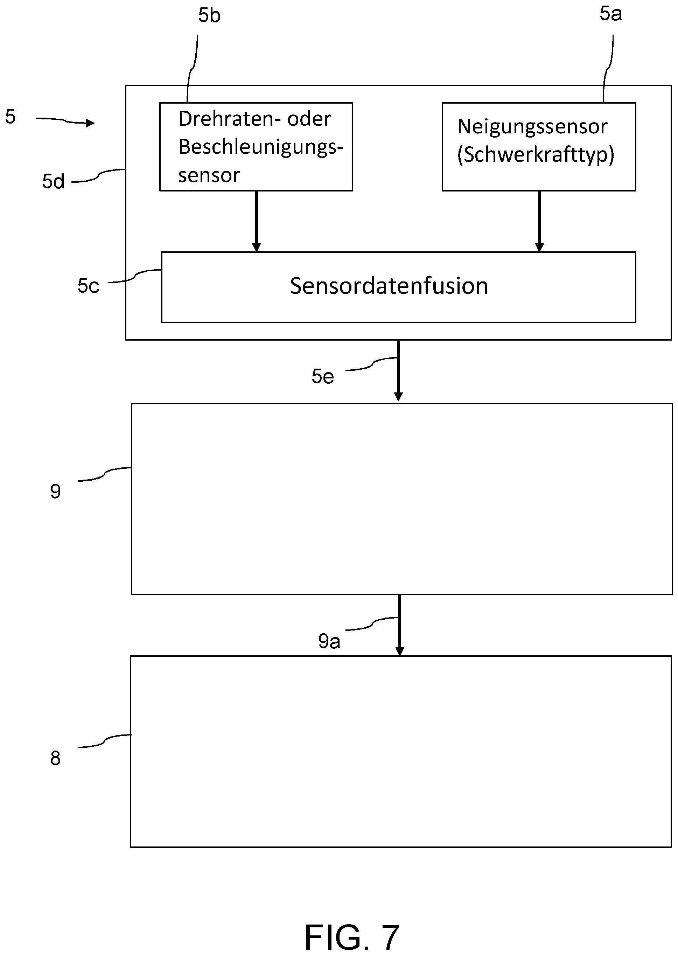

Die Verteilmaschine 1 umfasst ferner eine beschleunigungskompensierte Neigungssensoreinrichtung 5 (nachfolgend kurz als beschleunigungskompensierter Neigungssensor beschrieben) zur Bestimmung einer Drehlage des Verteilergestänges 3, der im Bereich des Mittelteils 3a des Verteilergestänges 3 angeordnet ist. Der Aufbau des beschleunigungskompensierten Neigungssensors 5 ist schematisch in Figur 7 dargestellt.

Im Gegensatz zu einem herkömmlichen Neigungssensor vom Schwerkrafttyp, bei denen das Ausgangssignal der Neigungsmessung durch externe Beschleunigungen, die zusätzlich zur Erdbeschleunigung auf das Messobjekt wirken, beispielsweise durch Wankbewegungen des Trägerfahrzeugs im unebenen Gelände erzeugte Beschleunigungen, horizontale Beschleunigungen beim Beschleunigen und Bremsen etc) verfälscht wird, unterscheidet sich der beschleunigungskompensierte Neigungssensors 5 dadurch, dass sein Ausgangssignal nicht oder zumindest nur geringfügig durch solche externen Beschleunigungen verfälscht ist.

Hierzu umfasst der beschleunigungskompensierte Neigungssensor 5, wie in Figur 7 schematisch dargestellt ist, zunächst eine erste Messeinrichtung 5a, die einem herkömmlichem Neigungssensor vom Schwerkrafttyp entspricht. Der herkömmliche Neigungssensor 5a kann ein statischer Neigungssensor sein, z. B. ein flüssigkeitsbasierter, thermischer oder MEMS-Neigungssensor sein, der ausgebildet ist, zweiachsig die Neigung des Sensors 5 zu bestimmen. Statische Neigungssensoren können im statischen Zustand, wo keine externen Beschleunigungen zusätzlich zur Erdbeschleunigung wirken, die Neigung mit hoher Genauigkeit erfassen, die hierbei normalerweise als Absolutwert erfasst wird.

Zusätzlich umfasst der beschleunigungskompensierte Neigungssensor 5 eine zweite Messeinrichtung 5b, die als Drehratensensor, z. B. als Gyroskop, ausgeführt ist. Auch eine Ausführung als Beschleunigungssensor ist möglich.

Ferner umfasst der beschleunigungskompensierte Neigungssensor 5 eine Sensordatenfusionseinrichtung 5c, die ausgebildet ist, die Messsignale sowohl der Neigungssensors 5a und des Drehratensensors 5b zu verarbeiten und diese hierbei im Rahmen einer Sensordatenfusion zu verknüpfen. Die Sensordatenfusionseinrichtung 5c kann als Mikrocomputer oder als anwendungsspezifischer integrierter Schaltkreis ausgeführt sein und empfängt eingangsseitig die Messsignale der beiden Messeinrichtungen 5a, 5b. Die Sensordatenfusionseinrichtung 5c ist ausgebildet, zunächst das Messsignal des Drehratensensors 5b mittels eines Integrators zeitlich zu integrieren und eine Drehlage zu berechnen, die dann mit der Drehlage, die vom Neigungssensor 5a direkt gemessen wurde, fusioniert wird.

Als Ergebnis wird eine um unerwünschte Beschleunigungseffekte korrigierte Drehlage erhalten, die vom beschleunigungskompensierte Neigungssensor 5 als Ausgangssignal 5e ausgegeben wird und eingangsseitig von der Steuereinrichtung 9 empfangen wird. Sowohl der Neigungssensor, der Drehratensensor als auch die Sensordatenfusionseinrichtung 5c sind von einem gemeinsamen Gehäuse 5d des beschleunigungskompensierten Neigungssensor 5 umgeben. Hierbei können sowohl der Neigungssensor und der Drehratensensor gehäuselos, d. h. ohne eigenes Gehäuse, als Messzellen ausgeführt sein und in dem gemeinsamen Gehäuse 5d untergebracht sein.

Die Sensordatenfusionseinrichtung 5c kann zur Sensordatenfusion beispielsweise eine Kalman-Filterung ausführende Mittel und/oder Mittel zur Tiefpassfilterung der sensorisch erfassten Drehlage des Neigungssensors 5a umfassen. Die Sensordatenfusionseinrichtung 5c kann ferner Mittel zum Vergleich der tiefpassgefilterten sensorisch erfassten Drehlage unter ständigem Abgleich auf null mit der anhand einer Drehgeschwindigkeit berechneten Drehlage des Drehratensensors 5b umfassen, um die Winkeldrift zu kompensieren. Beispielhaft wird auf die Sensordatenfusionierung, wie in der Patentschrift EP 3 007 553 B1 beschrieben, für eine mögliche Umsetzung verwiesen. Andere bekannte Techniken zur Sensorfusion sind ebenfalls möglich, um die durch zeitliche Integration berechnete Drehlage mit der gemessenen Drehlage zu fusionieren und hieraus eine möglichst exakte Drehlage des Verteilergestänges 3 zu bestimmen. Lediglich beispielhaft können Fusionsalgorithmen basierend auf rekursiver Bayes-Schätzung, z. B. Kaiman-Filter oder Partikelfilter für multi-modale Wahrscheinlichkeitsverteilung zwischen Neigungssensoreinrichtungen zum Einsatz kommen.

Optional kann zusätzlich eine weiterer Drehwinkelsensor 6 zur Erfassung einer Relativdrehung zwischen Trägerfahrzeug 2 und Verteilergestänge 3 vorgesehen sein, der zwischen Trägerfahrzeug 2 und Verteilergestänge 3 angeordnet ist. Hierdurch kann die Drehlagenmessung weiter verbessert werden.

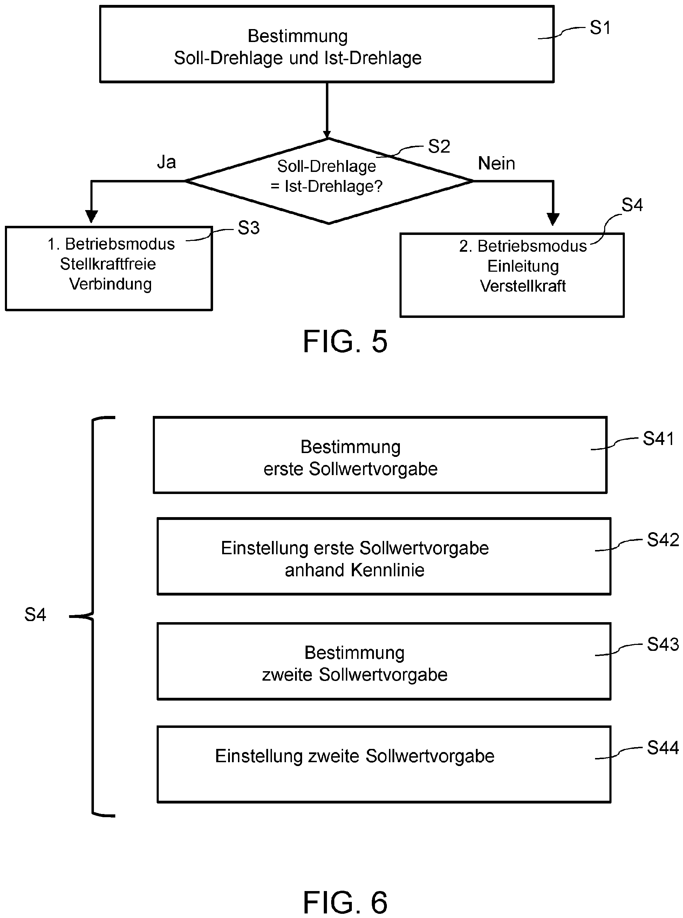

Die Steuereinrichtung 9 prüft anhand der von dem beschleunigungskompensierten Neigungssensor 5 erfassten Drehlage (Drehlagensignal 5e), ob ein Stellsignal an die Stelleinrichtung 8 verändert werden muss und steuert die Stelleinrichtung 8 entsprechend über Ausgabe eines entsprechenden Stellsignals 9a, was nachfolgend noch unter Bezugnahme auf die in Figur 5 beschriebenen Betriebsmodi näher beschrieben wird.

Das Verteilergestänge 3 ist am Trägerfahrzeug 2 über einen rahmenartigen Träger 11 befestigt. Hierbei ist das Verteilergestänge an einer Aufhängung 11a des Trägers 11 aufgehängt und hierüber am Träger 11 verschwenkbar befestigt. Der Träger 11 ist mittels eines Parallelogrammgestänges 24 höhenverstellbar zum Trägerfahrzeug 2 bzw. höhenverstellbar zu einer Bodenoberfläche angebracht. Zur Höhenverstellung ist dem Parallelogrammgestänge 24 ein Linearantrieb 25 in Form eines Hydraulik- oder Pneumatikzylinders derartig zugeordnet, dass der Höhenabstand zwischen dem Verteilgestänge 3 und einer Bodenoberfläche bzw. einem Pflanzenbestand variabel veränderbar ist. Der Träger 11 ist nicht um die Schwenkachse A verschwenkbar, dagegen ist das Verteilergestänge 3 um die Drehachse A verschwenkbar an der Aufhängung 11a am Träger 11 angeordnet. Die hier gezeigte Befestigung und Aufhängung des Verteilergestänges 3 am Trägerfahrzeug 2 ist lediglich beispielhaft. Aus der Praxis sind eine Vielzahl weitere Aufhängungen von Verteilergestängen am Trägerfahrzeug bekannt, die ebenfalls alternativ verwendet werden könnten.

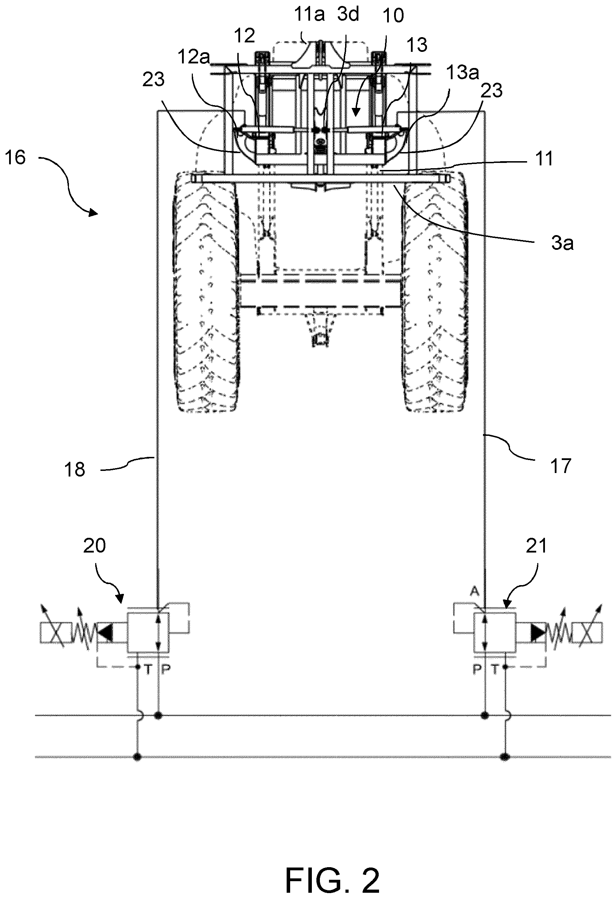

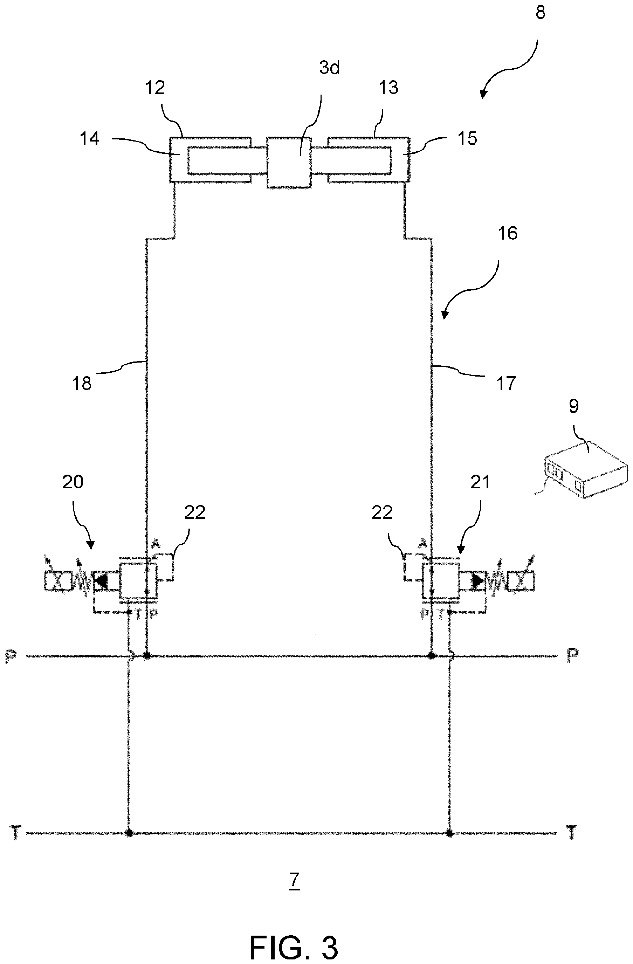

Die Verteilmaschine 1 umfasst ferner eine Steuereinrichtung 9 zur Steuerung und/oder Regelung einer Drehlage des Verteilergestänges 3 um die Schwenkachse A, wobei die Steuereinrichtung 9 hierzu eine druckmittelbetätigte Stelleinrichtung 8 ansteuert. Die Steuereinrichtung und die Stelleinrichtung 8 sind schematisch in Figur 3 dargestellt. Die druckmittelbetätigte Stelleinrichtung 8 umfasst zwei im Wesentlichen entgegengesetzt wirkende Wirkbereiche 14, 15, mittels der eine Stellkraft erzeugbar ist, um das Verteilergestänge 3 gezielt um die Schwenkachse A zu bewegen. Dies ist in der Detailansicht der Figur 2 und ferner der Figur 3 erkennbar.

Die Stelleinrichtung 8 umfasst zur Ausbildung der beiden Wirkbereiche 14, 15 ein Stellorgan 10 in Form eines Linearaktuators, hier beispielhaft als zwei einfach wirkende, gegensinnig angeordnete Hydraulik - oder Pneumatikzylinder 12, 13 (auch als Stellzylinder bezeichnet) ausgeführt. Die Stellzylinder 12, 13 sind hier ferner als Plungerzylinder ausgeführt. Die Plungerzylinder sind an ihrem gehäuseseitigen Ende 12a, 13a an einem bügelartig abstehenden Abschnitt 23 des Trägers 11 befestigt. Die Anbindung der Stellzylinder 12, 13 am Verteilergestänge 3 erfolgt am vorderen Ende der Kolbenstange an einem Abschnitt 3d des Mittelteils 3a des Verteilergestänges 3a.

Der Wirkbereich 14 (oder 15) des Stellzylinders 12 (oder 13) entspricht dem Bereich des Stellzylinders, in welchem die vom Druckmittel erzeugte Druckkraft in eine Bewegung der Kolbenstange des Stellzylinders 12, 13 umgesetzt wird.

Zur Erzeugung eines auf die Kolbenstange der Stellzylinder 12, 13 wirkenden Drucks sind die Wirkbereiche 14, 15 an einem Druckmittelkreislauf 16 angeschlossen. Hierzu ist an jedem Wirkbereich 14, 15 je eine Druckmittelleitungsstrecke 17, 18 angeschlossen, durch welche den Wirkbereichen 15, 15 ein Druckmittel, z. B. Luft oder Hydraulikflüssigkeit, zuführbar und aus diesen abführbar ist. In jeder Druckmittelleitungstrecke 17, 18 ist jeweils ein Druckregelventil 20, 21 zur Steuerung eines an dem jeweiligen Wirkbereich 14, 15 anliegenden Drucks angeordnet. Die beiden Druckregelventile 20, 21 sind als elektromagnetisch angesteuerte Proportional-Druckregelventile ausgeführt. Weitere Komponenten des Fluidkreislaufs, wie Pumpe und Fluidreservoir sind in an sich bekannter Weise ausgeführt und nicht dargestellt.

Die beiden Stellzylinder 12, 13 sind zueinander gegensinnig angeordnet, so dass zwei im Wesentlichen entgegengesetzt wirkende Wirkbereiche 14, 15 ausgebildet werden. Dies bedeutet, dass eine Druckkraft des Druckmittels in dem einen Wirkbereich 14 bzw. dem einen Stellzylinder 12 eine Verstellkraft auf das Verteilergestänge in der einen Richtung um die Schwenkachse erzeugt und eine Druckkraft von Druckmittel in dem anderen Wirkbereich 15 bzw. dem anderen Zylinder 13 eine Verstellkraft auf das Verteilergestänge in der entgegengesetzten Richtung um die Schwenkachse erzeugt. Der Druck und entsprechend die Stellkraft in dem Wirkbereich 14 wird vom Druckregelventil 20 eingestellt. Der Druck und entsprechend die Stellkraft in dem Wirkbereich 15 wird vom Druckregelventil 21 eingestellt. Durch die Regelung des an den Wirkbereichen 14, 15 bzw. den Stellzylindern 20, 21 anliegenden Druckmitteldrucks kann somit die Drehlage des Verteilergestänges 3 beeinflusst werden.

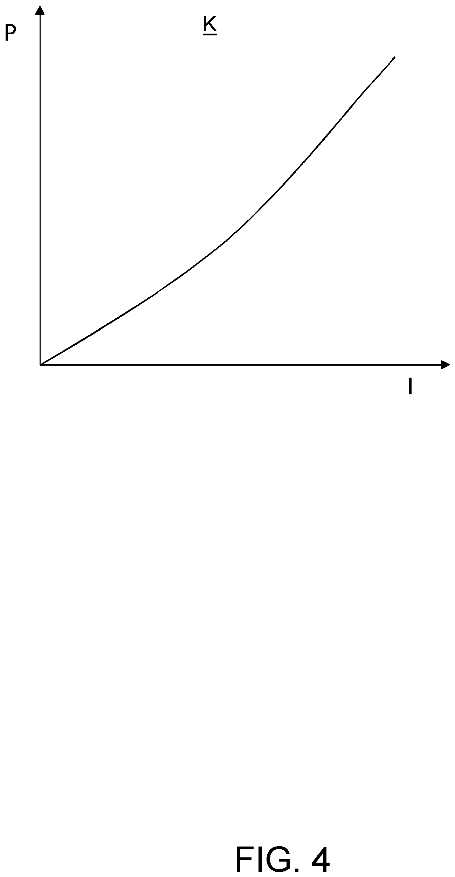

In der Steuereinrichtung 9 ist für jedes der Druckregelventile 20, 21 eine Kennlinie K hinterlegt, die einen Zusammenhang zwischen Sollwertvorgabe, z. B. eines an den Wirkbereichen zu erzeugendem Drucks P, und elektrischem Ansteuerungssignal der Druckmittelregelventile 20, 21, z. B. deren Bestromung I, festlegt, was in Figur 4 schematisch illustriert ist. Die Steuereinrichtung 9 ist ausgebildet, die Druckmittelregelventile 20, 21 jeweils anhand der Kennlinie K elektrisch gesteuert auf die Sollwertvorgabe einzustellen.

Die Funktionsweise der Steuerung oder Regelung der Drehlage des Verteilergestänges 3 ist beispielhaft anhand der Figuren 5 bis 8 illustriert. Figur 5 zeigt zunächst ein schematisches Blockdiagramm zur Illustration der Regelung der Drehlage des Verteilergestänges 3 gemäß einem Ausführungsbeispiel. Im Arbeitsbetrieb der landwirtschaftlichen Verteilermaschine 1, d. h. wenn das Verteilergestänge sich im ausgeklappten Zustand und damit in der Arbeitsposition befindet, ist es erforderlich, dessen Drehlage auf eine gewünschte Solldrehlage einzustellen, um z. B. einen gleichmäßigen Abstand der Sprühdüsen zum Pflanzenbestand einzustellen. Hierzu ist die Steuereinrichtung 9 programmtechnisch eingerichtet, fortlaufend zu überwachen, ob die aktuelle Drehlage des Verteilergestänges 3 der gewünschten Solldrehlage entspricht. Hierzu werden zunächst die Solldrehlage und die momentane Drehlage des Verteilergestänges 3 bestimmt (Schritt S1 in Figur 5).

Die Solldrehlage kann beispielsweise anhand der Messwerte der Ultraschallsensoren 19 ermittelt werden, die den Abstand des Verteilergestänges an den Messpunkten der Ultraschallsensoren 19 zum Boden bzw. zum Pflanzenbestand ermitteln. Die Solldrehlage kann auch anderweitig vorgegeben werden, z. B. durch eine Benutzereingabe.

Die Steuereinrichtung 9 ermittelt ferner die momentane Drehlage des Verteilergestänges 3 anhand der Ausgangssignale 6e des beschleunigungskompensierten Drehratensensors 5, wie vorstehend beschrieben.

In Schritt S2 wird überwacht, ob die bestimmte momentane Drehlage des Verteilergestänges 3 der Solldrehlage entspricht. Dies ist der Fall, wenn die momentane Drehlage nicht mehr als ein vorgegebener Schwellenwert von der Solldrehlage abweicht. Falls die bestimmte momentane Drehlage des Verteilergestänges 3 der Solldrehlage entspricht, wird von der Steuereinrichtung 9 in Schritt S3 ein Betriebsmodus (erster Betriebsmodus) durchgeführt, in dem das Verteilergestänge weitestgehend von Drehmomenten um die Schwenkachse A resultierend aus Fahrzeugbewegungen um die Fahrzeuglängsachse entkoppelt ist. Hierzu wird ein aktuelles elektrisches Ansteuerungssignal der Druckmittelregelventile 20, 21 konstant gehalten.

In diesem Betriebsmodus wird mittels der Druckregelventile 20, 21 eine quasi stellkraftfreie Verbindung zwischen Verteilergestänge und Trägerfahrzeug hergestellt, derart, dass beispielsweise durch Wankbewegungen des Trägerfahrzeugs oder durch Gestängebewegungen verursachte Druckspitzen oder Kräfteschwankungen an den Wirkbereichen durch die Druckmittelregelventile selbstständig ausgeregelt werden, indem der oder die aktuell über die aktuelle Bestromung der Druckregelventile 20, 21 vorgegebene Druck oder Kraft an den Wirkbereichen 14, 15 konstant gehalten wird. Das anhand der Kennlinie K ermittelte konstante elektrische Ansteuerungssignal der Druckmittelregelventile 20, 21 stellt sicher, dass in das Verteilergestänge eingeleitete Störmomente, z. B. resultierend aus Wankbewegungen des Trägerfahrzeugs, sofort ausgeglichen, z. B. ausregegelt werden, so dass diese erst gar nicht zu einer unerwünschten Veränderung der Drehlage und unerwünschten Verstellung des Verteilergestänges führen.

Die Druckregelventile 20, 21 haben einen Druckbereich von 0 Bar bis 120 Bar. Damit z. B. keine unerwünschte Stellkraft in das Verteilergestänge 3 eingeleitet wird, werden beispielsweise beide Wirkbereiche 14, 15 der Stelleinrichtung mit einem konstanten Druck, lediglich beispielhaft z. B. 30 Bar, als Sollwertvorgabe beaufschlagt. Anders ausgedrückt, werden im ersten Betriebsmodus beide Wirkbereiche 14, 15 bzw. die Zylinderkammern der Stellzylinder 12, 13 mit z. B. 30 Bar beaufschlagt.

Kommt es nun beispielsweise durch Gestängebewegungen zu kurzzeitigen "Druckspitzen" an den Wirkbereichen 14, 15, werden diese mittels der Druckregelventile 20, 21 entsprechend sofort ausgeregelt, so dass derartige kurzfristige Druckspritzen gar nicht erst zu einer unerwünschten Verstellung des Verteilergestänges 3 führen können. Anders ausgedrückt bedeutet dies, dass die Druckregelventile 20, 21 ausgebildet sind, einen auf Basis der Kennlinie K von der Steuereinrichtung 9 über die entsprechende Bestromung eingestellten Druck selbstständig konstant zu halten. Dargestellt wird dies durch die mit dem Bezugszeichen 22 gekennzeichnete Leitungsverbindung am Druckregelventil 20, 21. Zusätzliche Drucksensoren sind demnach nicht notwendig. Die Kräfte halten sich somit selbstständig in Waage. Auf das Verteilergestänge 3 einwirkende Störmomente, z. B. resultierend aus Wankbewegungen des Trägerfahrzeugs 2, können somit auf effiziente Weise ausregelt werden, bevor diese als unerwünschte Stellkräfte zu einer Verstellung der Drehlage des Verteilergestänges 3 führen.

Falls die bestimmte momentane Drehlage des Verteilergestänges 3 nicht der Solldrehlage entspricht, d. h. um mehr als ein Schwellenwert von dieser abweicht, wird von der Steuereinrichtung 9 in Schritt S4 ein weiterer Betriebsmodus (zweiter Betriebsmodus) durchgeführt, in welchem die Steuereinrichtung 9 die Stelleinrichtung 8 derart ansteuert, dass eine definierte Verstellkraft in das Verteilergestänge 3 eingeleitet wird, um das Verteilergestänge wieder in die Solldrehlage zu verdrehen.

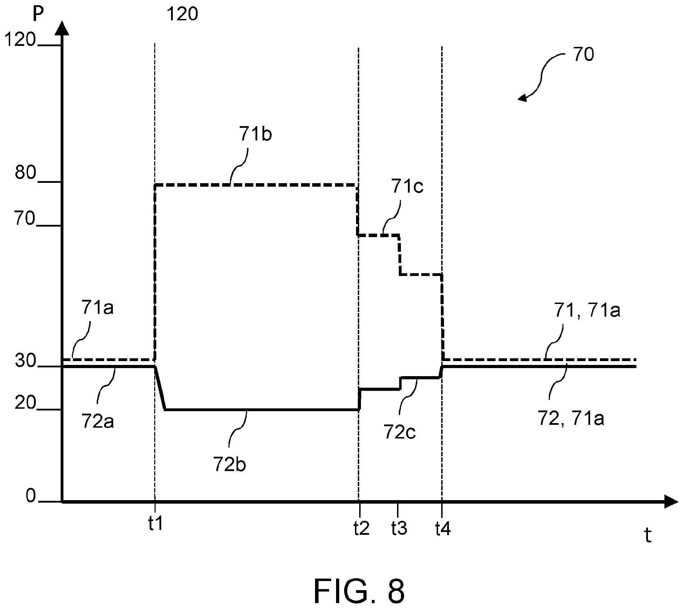

Eine beispielhafte Ausführungsform des zweiten Betriebsmodus ist in den Figuren 6 und 8 dargestellt. In Figur 8 zeigt die gestrichelte Linie 71 den zeitlichen Verlauf der Sollwertvorgabe des Wirkbereichs 14 und die durchgezogene Linie 72 den zeitlichen Verlauf der Sollwertvorgabe des Wirkbereichs 15. Bis zum Zeitpunkt t1 hat die Sollwertvorgabe an beiden Wirkbereichen den Wert 30 Bar (Abschnitte 71a und 72a), so dass das Verteilergestänge in der aktuelle Drehlage gehalten wird.

Kommt es nun im Zeitpunkt t1 zu einer Auslenkung des Verteilergestänges 3, wird zunächst anhand der Abweichung der momentanen Drehlage von der Solldrehlage eine neue Sollwertvorgabe (Schritt S41) für jeden Wirkbereich 14, 15 eines an den Wirkbereichen 14, 15 wirkenden Drucks des Druckmittels bestimmt. Anhand der Abweichung der momentanen Drehlage von der Solldrehlage und der bekannten Massenträgheit des Verteilergestänges 3 bestimmt die Steuereinrichtung 9, welches Drehmoment in das Verteilergestänge über die Stelleinrichtung 8 eingeleitet werden muss, um die Zielposition, d. h. die Solldrehlage, zu erreichen. Anders ausgedrückt, ist die Steuereinrichtung 9 ausgebildet, eine neue Sollwertvorgabe zu bestimmen, d. h. welche Verstellkraft (Zylinderkraft) benötigt wird bzw. welcher Druck an den Stellzylindern 12, 13 benötigt wird. Diese Sollwertvorgabe, d. h. dieser Druck, wird nun anhand der Kennlinie K am Druckregelventil erzeugt (Schritt S42). Diese Sollwertvorgabe ist in Figur 6 als erste Sollwertvorgabe bezeichnet. Die Kennlinie K gibt für den bestimmten Wert der Sollwertvorgabe die Bestromung der Druckregelventile 20, 21 vor.

Wiederum lediglich beispielhaft kann die Abweichung der momentanen Drehlage von der Solldrehlage ergeben, dass ausgehend von 30 Bar an beiden Wirkbereichen 14, 15 nun am Wirkbereich 14 ein Druck von 80 Bar und am Wirkbereich 15 ein Druck von 20 Bar erforderlich ist, um eine entsprechende Verstellkraft zu erzeugen, die das Verteilergestänge in die Sollposition verdreht. Aus der Kennlinie K ergeben sich dann für die neuen Sollwertvorgaben von 20 Bar und 80 Bar die entsprechenden Bestromungswerte für die Druckregelventile 20, 21. Entsprechend werden die Druckregelventile 20, 21 von der Steuerungseinrichtung 9 elektrisch angesteuert, so dass diese über ihre Druckregelung eigenständig die neuen Sollwertvorgaben an den Wirkbereichen 14, 15 einstellen.

Eine Besonderheit der vorliegenden Ausführungsform liegt jedoch darin, dass diese Druckdifferenz 80 Bar - 20 Bar = 60 Bar jedoch nicht so lange konstant gehalten bis beispielsweise die Sollposition erreicht ist und dann wieder auf beispielsweise 30 Bar zu 30 Bar geregelt wird. Stattdessen wird sich diesen Werten (30 Bar), die zum Halten des Verteilergestänges 3 in der Sollposition erforderlich sind, schrittweise angenähert, in dem weitere (zweite) Sollwertvorgaben in Schritt S43 bestimmt und anhand der Kennlinie 6 eingestellt werden (Schritt S44).

Dies ist in Figur 8 durch den stufenartigen Verlauf der Sollwertvorgaben 71, 72 im Bereich zwischen t2 und t4 illustriert. Kurz vor Erreichung der Solldrehlage reduziert die Steuereinrichtung 9 die Sollwertvorgabe schrittweise stufenartig. Vorliegend wird im Zeitpunkt t2 die Sollwertvorgabe 71 des Wirkbereichs 14 auf 70 Bar reduziert und die Sollwertvorgabe 72 des Wirkbereichs 15 auf 25 Bar erhöht. Im Zeitpunkt t3 wird die Sollwertvorgabe 71 des Wirkbereichs 14 weiter auf 60 Bar reduziert und die Sollwertvorgabe 72 des Wirkbereichs 15 weiter auf 28 Bar erhöht. Im Zeitpunkt t4 mit Erreichen der Solldrehlage wird dann an beiden Wirkbereichen 14, 15 wieder eine Sollwertvorgabe (dritte Sollwertvorgabe) von 30 Bar vorgegeben, um das Verteilergestänge in der erreichten Solldrehlage zu halten.

Wie diese Differenzen der Sollwertvorgaben bzw. der stufenartige Verlauf definiert werden, kann auch abhängig von der jeweiligen Drehlage sein. Beispielsweise kann optional die Anzahl der zweiten Sollwertvorgaben und/oder deren Abweichung von der ersten und dritten Sollwertvorgabe, in Abhängigkeit von der Abweichung der bestimmten Drehlage von der Solldrehlage des Verteilergestänges 3 festgelegt werden.

Die in Figur 8 gezeigte Annäherung der dritten Sollwertvorgabe mittels der zweiten Sollwertvorgabe, um den stufenartigen Verlauf zu realisieren, bietet den besonderen Vorzug, dass das Verteilergestänge vor Erreichen der Solldrehlage aktiv abgebremst bzw. gedämpft wird, so dass ein schnelles Einstellen der Solldrehlage, möglichst ohne oder mit wenig Überschwingen ermöglicht wird.

### Bezugszeichenliste

- 1: Landwirtschaftliche Verteilmaschine, z. B. gezogene Feldspritze
- 2: Trägerfahrzeug
- 3: Verteilergestänge
- 3a: Mittelteil
- 3b, 3c: Ausleger
- 3e: Befestigungsabschnitt am Mittelteil
- 5: beschleunigungskompensierte Neigungssensoreinrichtung
- 5a: Erste Neigungssensoreinrichtung, z. B. Neigungssensor vom Schwerkrafttyp
- 5b: Zweite Neigungssensoreinrichtung, z. B. Drehratensensor
- 5c: Sensordatenfusionseinrichtung
- 5d: Gehäuse
- 5e: Ausgangssignal
- 6: Sensor zur Erfassung Relativdrehung zum Trägerfahrzeug
- 8: Druckmittelbetätigte Stelleinrichtung
- 9: Steuereinrichtung
- 9a: Ausgangssignal
- 10: Stellorgan
- 11: Träger
- 11a: Aufhängung
- 12: Stellzylinder, z. B. einfachwirkender Plungerzylinder
- 12a: Befestigungsstelle
- 13: Stellzylinder, z. B. einfachwirkender Plungerzylinder
- 13a: Befestigungsstelle
- 14: Erster Wirkbereich
- 15: Zweiter Wirkbereich
- 16: Druckmittelkreislauf
- 17: Druckmittelleitungsstrecke
- 18: Druckmittelleitungsstrecke
- 19: Ausbringmittel, z. B. Sprühdüsen
- 20: Druckregelventil
- 21: Druckregelventil
- 22: Regelleitung
- 23: Trägerabschnitt
- 24: Höhenverstellbares Parallelogrammgestänge
- 25: Hubzylinder
- 26: Ultraschallsensoren
- 70: Sollwertvorgabe
- 71,71a-c: Sollwertvorgabe für ersten Wirkbereich
- 72, 72a-c: Sollwertvorgabe für zweiten Wirkbereich
- A: Schwenkachse
- K: Kennlinie

## Patentansprüche

1. Landwirtschaftliche Verteilmaschine (1), vorzugsweise eine Feldspritze oder ein pneumatischer Düngerstreuer, umfassend
ein Trägerfahrzeug (2);
ein Verteilergestänge (3) zum Ausbringen von Material, wie Düngemittel, Pflanzenschutzmittel oder Saatgut, das zumindest um eine in Fahrtrichtung verlaufende Schwenkachse (A) bewegbar am Trägerfahrzeug (2) mittelbar oder unmittelbar angeordnet ist, wobei das Verteilergestänge (3) zueinander verschwenkbare Segmente (3a, 3b, 3c) aufweist, die um aufrechte Achsen zueinander verschwenkbar sind und/oder in einer senkrecht zur Fahrtrichtung der landwirtschaftlichen Verteilmaschine (1) angeordneten Ebene relativ zueinander verschwenkbar sind;
eine Abstandssensoreinrichtung (26), die ausgebildet ist, einen Abstand des Verteilergestänges (3) zu einer Bodenfläche und/oder einem Pflanzenbestand zu erfassen; und
eine beschleunigungskompensierte Neigungssensoreinrichtung (5) zur Bestimmung einer Drehlage des Verteilergestänges (3);
**dadurch gekennzeichnet, dass** die Komponenten (5a, 5b, 5c) der beschleunigungskompensierten Neigungssensoreinrichtung (5)
a) von einem gemeinsamen Gehäuse (5d) umhaust sind und/oder als bauliche Einheit ausgebildet sind; und/oder
b) mechanisch miteinander gekoppelt sind, so dass diese die gleiche Neigung und/oder die gleiche Beschleunigung erfahren; und/oder
c) an der gleichen Stelle am Verteilergestänge (3), vorzugsweise am Mittelteil (3a) des Verteilergestänges (3), angeordnet sind.

2. Landwirtschaftliche Verteilmaschine (1) nach Anspruch 1, wobei die beschleunigungskompensierte Neigungssensoreinrichtung (3) Mittel (5b, 5c) zur Kompensation externer Beschleunigungen, die zusätzlich zur Erdbeschleunigung auf die Neigungssensoreinrichtung wirken, vorzugsweise Querbeschleunigungen, aufweist.

3. Landwirtschaftliche Verteilmaschine (1) nach Anspruch 1 oder 2, wobei die beschleunigungskompensierte Neigungssensoreinrichtung (5) einen Beschleunigungsaufnehmer und/oder Drehratensensor (5b), vorzugsweise ein Gyroskop, umfasst und ausgebildet ist, in Abhängigkeit von den Messwerten des Beschleunigungsaufnehmers und/oder Drehratensensors (5b) auftretende Störgrößen, welche eine Neigungsmessung verfälschen und durch externe Beschleunigungen, vorzugsweise Querbeschleunigungen, die zusätzlich zur Erdbeschleunigung auf die Neigungssensoreinrichtung (5) wirken, verursacht werden, herauszurechnen.

4. Landwirtschaftliche Verteilmaschine (1) nach einem der vorherigen Ansprüche, wobei die die beschleunigungskompensierte Neigungssensoreinrichtung (5) umfasst:
a) eine erste Neigungssensoreinrichtung (5a),
b) eine zweite Neigungssensoreinrichtung (5b), die auf einem im Vergleich zur ersten Neigungssensoreinrichtung (5a) unterschiedlichen Messprinzip basiert, und
c) eine Fusionseinrichtung (5c), die ausgebildet ist, Messwerte der ersten Neigungssensoreinrichtung (5a) mit Messwerten der zweiten Neigungssensoreinrichtung (5b) zu verrechnen, um die Auswirkungen von bewegungsbedingten Beschleunigungen auf die Neigungsmessung zu kompensieren.

5. Landwirtschaftliche Verteilmaschine (1) nach Anspruch 4,
wobei die erste Neigungssensoreinrichtung (5a) als (quasi)statischer Neigungssensor ausgeführt ist, der eine Neigung in Bezug auf die Schwerkraft misst und dessen Neigungsmessung durch externe Beschleunigungen, die zusätzlich zur Erdbeschleunigung auftreten, verfälscht wird, und
wobei die zweite Neigungssensoreinrichtung (5b) einen Beschleunigungsaufnehmer und/oder Drehratensensor umfasst.

6. Landwirtschaftliche Verteilmaschine (1) nach einem der Ansprüche 4 bis 5, wobei die Fusionseinrichtung (5c) ausgebildet ist, Messwerte der zweiten Neigungssensoreinrichtung zur Ermittlung einer Drehlage des Verteilergestänges zeitlich zu integrieren und mittels einer Datenfusionsberechnung mit den Messwerten der ersten Neigungssensoreinrichtung (5a) zur Bestimmung einer beschleunigungskompensierten Drehlage des Verteilergestänges (3) zu verknüpfen.

7. Landwirtschaftliche Verteilmaschine (1) nach einem der vorhergehenden Ansprüche, umfassend
a) eine Stelleinrichtung, mittels der eine Stellkraft erzeugbar ist, um das Verteilergestänge (3) um die Schwenkachse (A) zu bewegen, und
b) eine Steuereinrichtung (9) zur Steuerung und/oder Regelung einer Drehlage des Verteilergestänges (3) um die Schwenkachse (A), wobei die Steuereinrichtung (9) ausgebildet ist, in Abhängigkeit von den Ausgangssignalen (5e) der beschleunigungskompensierten Neigungssensoreinrichtung (5) Steuersignale (9a) zur Ansteuerung der Stelleinrichtung (8) zu erzeugen.

8. Landwirtschaftliche Verteilmaschine (1) nach Anspruch 7, wobei die Steuereinrichtung (9) ausgebildet ist, eine aktuelle Drehlage des Verteilergestänges (3) lediglich in Abhängigkeit des Ausgangssignals (5e) der beschleunigungskompensierten Neigungssensoreinrichtung (5) zu bestimmen.

9. Landwirtschaftliche Verteilmaschine (1) nach Anspruch 7, wobei die Steuereinrichtung (9) ausgebildet ist, eine aktuelle Drehlage des Verteilergestänges (3) in Abhängigkeit von den Ausgangssignalen (5e) der beschleunigungskompensierten Neigungssensoreinrichtung (5) und von den Ausgangssignalen eines zwischen Trägerfahrzeug und Verteilergestänge angeordneten und eine Relativdrehung zwischen Trägerfahrzeug und Verteilergestänge erfassenden Drehwinkelsensors (6) zu bestimmen.

10. Landwirtschaftliche Verteilmaschine (1) nach einem der Ansprüche 7 bis 9,
a) wobei die Stelleinrichtung (8) als eine druckmittelbetätigte Stelleinrichtung mit zwei im Wesentlichen entgegengesetzt wirkenden Wirkbereichen (14, 15) ausgeführt ist, mittels der eine Stellkraft erzeugbar ist, um das Verteilergestänge (3) um die Schwenkachse (A) zu bewegen, wobei jedem Wirkbereich (14, 15) ein Druckmittelregelventil (20,21) zugeordnet ist zur Steuerung eines an dem jeweiligen Wirkbereich anliegenden Drucks oder Volumenstroms, und
b) wobei die Steuereinrichtung (9) ausgebildet ist, in Abhängigkeit von der bestimmten Drehlage des Verteilergestänges (3) eine Sollwertvorgabe eines an den Wirkbereichen (14, 15) wirkenden Drucks oder einer an den Wirkbereichen wirkenden Stellkraft des Druckmittels zu bestimmen und die Druckmittelregelventile (20, 21) jeweils elektrisch gesteuert auf die Sollwertvorgabe einzustellen.

11. Landwirtschaftliche Verteilmaschine (1) nach Anspruch 10, wobei die Steuereinrichtung (9) ausgebildet ist, die Druckmittelregelventile (20, 21) jeweils anhand einer vorbestimmten Kennlinie (K) der Druckmittelregelventile elektrisch gesteuert auf die Sollwertvorgabe einzustellen, wobei die Kennlinie (K) der Druckmittelregelventile (20, 21) einen Zusammenhang zwischen Sollwertvorgabe und elektrischem Ansteuerungssignal der Druckmittelregelventile (20, 21) festlegt.

12. Landwirtschaftliche Verteilmaschine (1) nach Anspruch 11, wobei die Steuerungseinrichtung (9) ausgebildet ist,
a) die Sollwertvorgabe ohne einen sensorisch erfassten Druckwert oder Volumenstromwert des Druckmittels zu bestimmen; und/oder
b) einen Steuerstrom zur Ansteuerung der Druckmittelregelventile (20, 21) ausschließlich anhand der Kennlinie und der Drehlage der beschleunigungskompensierten Sensoreinrichtung (5) oder einer hieraus berechneten Größe zu bestimmen.

13. Landwirtschaftliche Verteilmaschine (1) nach einem der Ansprüche 10 bis 12, wobei die Steuereinrichtung (9) ausgebildet ist, falls die bestimmte Drehlage einer Solldrehlage des Verteilergestänges (3) entspricht und/oder nicht mehr als um einen Schwellenwert von der Solldrehlage abweicht,
a) ein der Sollwertvorgabe zugeordnetes elektrisches Ansteuerungssignal der Druckmittelregelventile (20, 21) konstant zu halten und vorzugsweise keine Stellkräfte in das Verteilergestänge (3) einzuleiten, und/oder
b) einen ersten Betriebsmodus (S3) durchzuführen, in dem das Verteilergestänge (3) weitestgehend von Drehmomenten um die Schwenkachse (A) resultierend aus Fahrzeugbewegungen um die Fahrzeuglängsachse entkoppelt ist, wobei ein der Sollwertvorgabe entsprechendes elektrisches Ansteuerungssignal der Druckmittelregelventile konstant gehalten wird.

14. Landwirtschaftliche Verteilmaschine (1) nach einem der Ansprüche 10 bis 13, wobei die Stelleinrichtung (8)
a) zur Ausbildung der zwei im Wesentlichen entgegengesetzt wirkenden Wirkbereiche einen doppeltwirkenden fluidischen Druckmittelzylinder oder zwei gegensinnig arbeitende einfachwirkende fluidische Druckmittelzylinder, vorzugsweise zwei Plungerzylinder (12, 13), umfasst; und/oder
b) ausgebildet ist, das Verteilergestänge (3) wahlweise in beide Drehrichtungen um die in Fahrtrichtung verlaufende Schwenkachse (A) mit einer Winkelgeschwindigkeit von mindestens 0,1 rad/s, weiter vorzugsweise mindestens 0,2 rad/s zu bewegen.

15. Landwirtschaftliche Verteilmaschine (1) nach einem der vorhergehenden Ansprüche,
a) wobei die mehreren zueinander verschwenkbaren Segmente ein Mittelteil (3a) und seitliche Auslegerarme (3a, 3b) aufweisen; und/oder
b) wobei die landwirtschaftliche Verteilmaschine (1) einen Vorratsbehälter für das auszubringende Verteilgut aufweist und mehrere in regelmäßigen Abständen zueinander angeordnete, am Verteilergestänge befestigte Verteilelemente, vorzugsweise Spritzdüsen (19) oder Prallelemente, aufweist, die in Fluidverbindung mit dem Vorratsbehälter bringbar sind; und/oder
c) wobei die landwirtschaftliche Maschine eine Höhenverstelleinrichtung (24, 25) zur Höhenverstellung des Verteilergestänges (3) gegenüber dem Trägerfahrzeug (2) aufweist; und/oder
d) wobei die Abstandssensoreinrichtungen ausgebildet ist, von mehreren der Segmente des Verteilergestänges jeweils einen Abstand des Segments zum Boden und/oder zum Pflanzenbestand zu messen und hierzu vorzugsweise mehrere Abstandssensoren umfassen, die an verschiedenen Segmente angeordnet sind.

## Claims

1. Agricultural distribution machine (1), preferably a field sprayer or a pneumatic fertiliser distribution machine, comprising
a carrier vehicle (2);
a distributing boom (3) for distributing material, such as fertiliser, plant protection agent or seed, which is arranged directly or indirectly on the carrier vehicle (2) so as to be movable at least about a pivot axis (A) extending in the direction of travel, wherein the distributing boom (3) has segments (3a, 3b, 3c) which are pivotable relative to one another about upright axes and/or are pivotable relative to one another in a plane arranged perpendicularly to the direction of travel of the agricultural distributing machine (1);
a distance sensor device (26) which is configured to detect a distance of the distributor boom (3) from a ground surface and/or a crop; and
an acceleration-compensated inclination sensor device (5) for determining a rotational position of the distributor boom (3);
**characterized in that** the components (5a, 5b, 5c) of the acceleration-compensated inclination sensor device (5) are
a) are enclosed by a common housing (5d) and/or are designed as a structural unit; and/or
b) are mechanically coupled to each other so that they experience the same inclination and/or the same acceleration; and/or
c) are arranged at the same place on the distributor boom (3), preferably on the middle part (3a) of the distributor boom (3).

2. Agricultural distribution machine (1) according to claim 1, wherein the acceleration-compensated inclination sensor device (3) comprises means (5b, 5c) for compensating external accelerations acting on the inclination sensor device in addition to the acceleration due to gravity, preferably transverse accelerations.

3. Agricultural distribution machine (1) according to claim 1 or 2, wherein the acceleration-compensated inclination sensor device (5) comprises an acceleration sensor and/or angular rate sensor (5b), preferably a gyroscope, and is configured to detect in dependence on the measured values of the acceleration sensor and/or angular rate sensor (5b), to eliminate occurring disturbance variables which falsify an inclination measurement and are caused by external accelerations, preferably transverse accelerations, which act on the inclination sensor device (5) in addition to the acceleration due to gravity.

4. Agricultural distribution machine(1) according to any one of the preceding claims, wherein said acceleration compensated inclination sensor means (5):
a) a first inclination sensor device (5a),
b) a second inclination sensor device (5b) based on a different measuring principle compared to the first inclination sensor device (5a), and
c) a fusion device (5c) which is configured to offset measured values of the first inclination sensor device (5a) with measured values of the second inclination sensor device (5b) in order to compensate for the effects of accelerations caused by movement and acting on the inclination measurement.

5. Agricultural distribution machine (1) according to claim 4,
wherein the first inclination sensor device (5a) is designed as a (quasi)static inclination sensor which measures an inclination with respect to gravity and whose inclination measurement is falsified by external accelerations occurring in addition to the acceleration due to gravity, and
wherein the second inclination sensor device (5b) comprises an acceleration sensor and/or a rotation rate sensor.

6. Agricultural distribution machine (1) according to one of claims 4 to 5, wherein the fusion device (5c) is configured to integrate over time measured values of the second inclination sensor device for determining a rotational position of the distributor boom and to link them by means of a data fusion calculation with the measured values of the first inclination sensor device (5a) for determining an acceleration-compensated rotational position of the distributor boom (3).

7. Agricultural distribution machine (1) according to one of the preceding claims, comprising
a) an actuating device by means of which an actuating force may be generated in order to move the distributor boom (3) about the pivot axis (A), and
b) a control device (9) for controlling and/or regulating a rotational position of the distributor boom (3) about the pivot axis (A), the control device (9) being configured to generate control signals (9a) for actuating the actuating device (8) as a function of the output signals (5e) of the acceleration-compensated inclination sensor device (5).

8. Agricultural distribution machine (1) according to claim 7, wherein the control device (9) is configured to determine a current rotational position of the distributor boom (3) only in dependence on the output signal (5e) of the acceleration-compensated inclination sensor device (5).

9. Agricultural distribution machine (1) according to claim 7, wherein the control device (9) is configured to determine a current rotational position of the distributor boom (3) as a function of the output signals (5e) of the acceleration-compensated inclination sensor device (5) and of the output signals of an angular rate sensor (6) arranged between the carrier vehicle and the distributor boom and detecting a relative rotation between the carrier vehicle and the distributor boom.

10. Agricultural distribution machine (1) according to one of the claims 7 to 9,
a) wherein the actuating device (8) is designed as a pressure medium-actuated actuating device with two substantially oppositely acting effective regions (14, 15), by means of which an actuating force may be generated in order to move the distributor boom (3) about the pivot axis (A), wherein a pressure medium regulating valve (20, 21) is associated with each effective region (14, 15) in order to control a pressure or volumetric flow applied to the respective effective region, and
b) the control device (9) being configured to determine, as a function of the determined rotational position of the distributor boom (3), a setpoint specification of a pressure acting on the active regions (14, 15) or of an actuating force of the pressure medium acting on the active regions and to set the pressure medium control valves (20, 21) to the setpoint specification in each case in an electrically controlled manner.

11. Agricultural distribution machine (1) according to claim 10, wherein the control device (9) is configured to set the pressure medium control valves (20, 21) to the setpoint value specification in each case in an electrically controlled manner on the basis of a predetermined characteristic curve (K) of the pressure medium control valves, wherein the characteristic curve (K) of the pressure medium control valves (20, 21) defines a relationship between the setpoint value specification and the electrical actuation signal of the pressure medium control valves (20, 21).

12. Agricultural distribution machine (1) according to claim 11, wherein the control device (9) is configured
a) to determine the setpoint specification without a pressure value or volume flow value of the pressure medium detected by sensors; and/or
b) to determine a control current for actuating the pressure medium control valves (20, 21) exclusively on the basis of the characteristic curve and the rotational position of the acceleration-compensated sensor device (5) or a variable calculated therefrom.

13. Agricultural distribution machine (1) according to one of the claims 10 to 12, wherein the control device (9) is configured, if the determined rotational position corresponds to a desired rotational position of the distributor boom (3) and/or does not deviate from the desired rotational position by more than a threshold value,
a) to keep an electrical actuation signal of the pressure medium control valves (20, 21) associated with the setpoint value constant and preferably not to introduce any actuating forces into the distributor boom (3), and/or
b) to carry out a first operating mode (S3) in which the distributor boom (3) is decoupled as far as possible from torques about the swivel axis (A) resulting from vehicle movements about the vehicle longitudinal axis, wherein an electrical control signal of the pressure medium control valves corresponding to the setpoint specification is kept constant.

14. Agricultural distribution machine (1) according to one of the claims 10 to 13, wherein the actuating device (8)
a) for forming the two substantially oppositely acting effective ranges, comprises a double-acting fluidic pressure medium cylinder or two oppositely acting single-acting fluidic pressure medium cylinders, preferably two plunger cylinders (12, 13); and/or
b) is configured to move the distributor boom (3) selectively in both directions of rotation about the swivel axis (A) running in the direction of travel at an angular velocity of at least 0.1 rad/s, further preferably at least 0.2 rad/s.

15. Agricultural distribution machine (1) according to one of the preceding claims,
a) wherein the plurality of segments pivotable relative to one another comprise a central part (3a) and lateral boom arms (3a, 3b); and/or
b) wherein the agricultural distributing machine (1) comprises a reservoir for the material to be distributed and comprises a plurality of distributing elements, preferably spray nozzles (19) or impact elements, which are arranged at regular intervals from one another and are fastened to the distributing linkage and which may be brought into fluid connection with the reservoir; and/or
c) wherein the agricultural machine has a height adjustment device (24, 25) for height adjustment of the distributor boom (3) relative to the carrier vehicle (2); and/or
d) wherein the distance sensor devices are configured to measure from several of the segments of the distributor boom in each case a distance of the segment to the ground and/or to the crop and for this purpose preferably comprise several distance sensors which are arranged on different segments.

## Revendications

1. Machine d'épandage agricole (1), de préférence pulvérisateur agricole ou épandeur pneumatique d'engrais, comprenant
un véhicule porteur (2) ;
une rampe d'épandage (3) destinée à distribuer des produits tels que des engrais, des produits phytosanitaires ou des semences, qui est disposée directement ou indirectement sur le véhicule porteur (2) de manière à pouvoir se déplacer au moins autour d'un axe de pivotement (A) s'étendant dans la direction de déplacement, la rampe d'épandage (3) comportant des segments (3a, 3b, 3c) pivotant les uns par rapport aux autres, qui peuvent pivoter les uns par rapport aux autres autour d'axes verticaux et/ou qui peuvent pivoter les uns par rapport aux autres dans un plan disposé perpendiculairement à la direction de déplacement de la machine d'épandage agricole (1) ;
un dispositif capteur de distance (26) conçu pour détecter une distance entre la rampe d'épandage (3) et une surface du sol et/ou un couvert végétal ; et
un dispositif capteur d'inclinaison compensé en accélération (5) pour déterminer une position de rotation de la rampe d'épandage (3) ;
**caractérisé en ce que** les composants (5a, 5b, 5c) du dispositif capteur d'inclinaison compensé en accélération (5)
a) sont conçus pour être logés dans un boîtier commun (5d) et/ou sous forme d'unité structurelle ; et/ou
b) sont mécaniquement accouplés l'un à l'autre, de telle sorte qu'ils subissent la même inclinaison et/ou la même accélération ; et/ou
c) sont disposés au même emplacement sur la rampe d'épandage (3), de préférence sur la partie centrale (3a) de la rampe d'épandage (3).

2. Machine d'épandage agricole (1) selon la revendication 1, dans laquelle le dispositif capteur d'inclinaison compensé en accélération (3) comporte des moyens (5b, 5c) destinés à compenser des accélérations externes qui agissent sur le dispositif capteur d'inclinaison en plus de l'accélération de la pesanteur, de préférence des accélérations transversales.

3. Machine d'épandage agricole (1) selon la revendication 1 ou 2, dans laquelle le dispositif capteur d'inclinaison compensé en accélération (5) comprend un capteur d'accélération et/ou un capteur de vitesse de rotation (5b), de préférence un gyroscope, et est conçu pour éliminer, en fonction des valeurs de mesure du capteur d'accélération et/ou du capteur de vitesse de rotation (5b), des grandeurs perturbatrices se produisant qui faussent une mesure d'inclinaison et qui sont provoquées par des accélérations externes, de préférence des accélérations transversales, agissant sur le dispositif capteur d'inclinaison (5) en plus de l'accélération de la pesanteur.

4. Machine d'épandage agricole (1) selon l'une des revendications précédentes, dans laquelle le dispositif capteur d'inclinaison compensé en accélération (5) comprend :
a) un premier dispositif capteur d'inclinaison (5a),
b) un deuxième dispositif capteur d'inclinaison (5b), qui est fondé sur un principe de mesure différent de celui du premier dispositif capteur d'inclinaison (5a), et
c) un dispositif de fusion (5c) conçu pour calculer des valeurs de mesure du premier dispositif capteur d'inclinaison (5a) à partir de valeurs de mesure du deuxième dispositif capteur d'inclinaison (5b), afin de compenser les effets des accélérations dues au mouvement sur la mesure d'inclinaison.

5. Machine d'épandage agricole (1) selon la revendication 4,
dans laquelle le premier dispositif capteur d'inclinaison (5a) est mis en œuvre sous la forme d'un capteur d'inclinaison (quasi)statique qui mesure une inclinaison par rapport à la gravité et dont la mesure d'inclinaison est faussée par des accélérations externes se produisqnt en plus de l'accélération de la pesanteur, et
dans laquelle le deuxième dispositif capteur d'inclinaison (5b) comprend un capteur d'accélération et/ou un capteur de vitesse de rotation.

6. Machine d'épandage agricole (1) selon l'une des revendications 4 à 5, dans laquelle le dispositif capteur de fusion (5c) est conçu pour intégrer dans le temps des valeurs de mesure du deuxième dispositif capteur d'inclinaison afin de déterminer une position de rotation de la rampe d'épandage et pour les combiner au moyen d'un calcul de fusion de données avec les valeurs de mesure du premier dispositif capteur d'inclinaison (5a) afin de déterminer une position de rotation de la rampe d'épandage compensée en accélération (3).

7. Machine d'épandage agricole (1) selon l'une des revendications précédentes, comprenant
a) un dispositif de réglage, au moyen duquel une force de réglage peut être générée pour déplacer la rampe d'épandage (3) autour de l'axe de pivotement (A), et
b) un dispositif de commande (9) destiné à commander et/ou réguler une position de rotation de la rampe d'épandage (3) autour de l'axe de pivotement (A), le dispositif de commande (9) étant conçu pour générer, en fonction des signaux de sortie (5e) du dispositif capteur d'inclinaison compensé en accélération (5), des signaux de commande (9a) destinés à commander le dispositif de réglage (8).

8. Machine d'épandage agricole (1) selon la revendication 7, dans laquelle le dispositif de commande (9) est conçu pour déterminer une position de rotation actuelle de la rampe d'épandage (3) uniquement en fonction du signal de sortie (5e) du dispositif capteur d'inclinaison compensé en accélération (5).

9. Machine d'épandage agricole (1) selon la revendication 7, dans laquelle le dispositif de commande (9) est conçu pour déterminer une position de rotation actuelle de la rampe d'épandage (3) en fonction des signaux de sortie (5e) du dispositif capteur d'inclinaison compensé en accélération (5) et des signaux de sortie d'un capteur d'angle de rotation (6) disposé entre le véhicule porteur et la rampe d'épandage et détectant une rotation relative entre le véhicule porteur et la rampe d'épandage.

10. Machine d'épandage agricole (1) selon l'une des revendications 7 à 9,
a) dans laquelle le dispositif de réglage (8) est mis en œuvre sous la forme d'un dispositif de réglage actionné par un fluide sous pression et doté de deux zones d'action (14, 15) agissant sensiblement en sens inverse, au moyen desquelles une force de réglage peut être générée afin de déplacer la rampe d'épandage (3) autour de l'axe de pivotement (A), une soupape de régulation de fluide sous pression (20, 21) étant associée à chaque zone d'action (14, 15) pour commander une pression ou un débit volumique s'appliquant à la zone d'action respective, et
b) dans laquelle le dispositif de commande (9) est conçu pour déterminer, en fonction de la position de rotation déterminée de la rampe d'épandage (3), une valeur de consigne d'une pression agissant sur les zones d'action (14, 15) ou d'une force de réglage du fluide sous pression agissant sur les zones d'action et pour régler respectivement à la valeur de consigne les soupapes de régulation de fluide sous pression (20, 21) par commande électrique.

11. Machine d'épandage agricole (1) selon la revendication 10, dans laquelle le dispositif de commande (9) est conçu pour régler respectivement par commande électrique à la valeur de consigne les soupapes de régulation de fluide sous pression (20, 21) au moyen d'une courbe caractéristique (K) prédéterminée des soupapes de régulation de fluide sous pression, la courbe caractéristique (K) des soupapes de régulation de fluide sous pression (20, 21) établissant une relation entre la valeur de consigne et le signal de commande électrique des soupapes de régulation de fluide sous pression (20, 21) .

12. Machine d'épandage agricole (1) selon la revendication 11, dans laquelle le dispositif de commande (9) est conçu
a) pour déterminer la valeur de consigne sans valeur de pression ni valeur de débit volumique du fluide sous pression détectées par capteur ; et/ou
b) pour déterminer un courant de commande destiné à attaquer les soupapes de régulation de fluide sous pression (20, 21) exclusivement au moyen de la courbe caractéristique et de la position de rotation du dispositif capteur compensé en accélération (5) ou d'une grandeur calculée à partir de celle-ci.

13. Machine d'épandage agricole (1) selon l'une des revendications 10 à 12, dans laquelle le dispositif de commande (9) est conçu, dans le cas où la position de rotation déterminée correspond à une position de rotation de consigne de la rampe d'épandage (3) et/ou ne s'écarte pas de la position de rotation de consigne de plus d'une valeur de seuil,
a) pour maintenir constant un signal de commande électrique des soupapes de régulation de fluide sous pression (20, 21) associé à la valeur de consigne et, de préférence, pour ne pas introduire de forces de réglage dans la rampe d'épandage (3), et/ou
b) pour mettre en œuvre un premier mode de fonctionnement (S3) dans lequel la rampe d'épandage (3) est notablement découplée des couples de rotation autour de l'axe de pivotement (A) résultant des mouvements du véhicule autour de l'axe longitudinal du véhicule, un signal de commande électrique des soupapes de régulation de fluide sous pression qui correspond à la valeur de consigne étant maintenu constant.

14. Machine d'épandage agricole (1) selon l'une des revendications 10 à 13, dans laquelle le dispositif de réglage (8)
a) comprend, pour former les deux zones d'action sensiblement opposées, un vérin fluidique à double effet ou deux vérins fluidiques à simple effet travaillant en sens inverse, de préférence deux cylindres plongeurs (12, 13) ; et/ou
b) est conçu pour déplacer la rampe d'épandage (3) au choix dans les deux sens de rotation autour de l'axe de pivotement (A) s'étendant dans la direction de déplacement à une vitesse angulaire d'au moins 0,1 rad/s, et plus préférablement d'au moins 0,2 rad/s.

15. Machine d'épandage agricole (1) selon l'une des revendications précédentes,
a) dans laquelle les multiples segments pivotant les uns par rapport aux autres comportent une partie centrale (3a) et des bras latéraux (3a, 3b) ; et/ou
b) dans laquelle la machine d'épandage agricole (1) comporte un réservoir de stockage destiné au produit à épandre et comporte plusieurs éléments d'épandage, de préférence des buses de pulvérisation (19) ou des éléments d'impact, disposés à intervalles réguliers les uns par rapport aux autres et fixés sur la rampe d'épandage, qui peuvent être mis en communication fluidique avec le réservoir de stockage ; et/ou
c) dans laquelle la machine agricole comporte un dispositif de réglage en hauteur (24, 25) destiné à régler en hauteur la rampe d'épandage (3) par rapport au véhicule porteur (2) ; et/ou
d) dans laquelle les dispositifs capteurs de distance sont conçus pour mesurer respectivement une distance du segment par rapport au sol et/ou au couvert végétal à partir de plusieurs des segments de la rampe d'épandage et comprennent à cet effet de préférence plusieurs capteurs de distance qui sont disposés sur différents segments.
